# EUROPEAN PATENT SPECIFICATION

(11) **EP 1 443 718 B1**
(45) Date of publication and mention of the grant of the patent: **20.08.2008**
(21) Application number: 03290256.1
(22) Date of filing: 03.02.2003
(51) Int. Cl.: H04L 12/56, H04B 7/185

(54) **Automatic filtering of routing information in a data transmission system**
Automatisches Filtern von Routing Informationen in einem Datenübermittlungssystem
Filtrage automatique d'information de routage dans un système de transmission de données

(43) Date of publication of application: 04.08.2004
(73) Proprietor: Inria Institut National de Recherche en Informatique et en Automatique, 78153 Le Chesnay Cedex (FR); Hitachi, Ltd., Tokyo 100-8280 (JP)
(72) Inventor: Takatani, Yukihiro, 06400 Cannes (FR); Nonaka, Naomichi, Yokohama-shi Kanagawa 223-0052 (JP); Asaeda, Hitoshi, 06600 Antibes (FR); Dabbous, Walid, 06000 Nice (FR)
(74) Representative: Beetz & Partner

(56) References cited:
- DABBOUS ET AL. : "Dynamic routing in networks with unidirectional links" WOSBIS'97, [Online] 1 October 1997 (1997-10-01), page 1-13 XP002251582 Budapest, Hungry Retrieved from the Internet: <URL:http://citeseer.nj.nec.com/rd/6942461 3%2C35462%2C1%2C0.25%2CDownload/http://cit eseer.nj.nec.com/compress/0/papers/cs/5883 /ftp:zSzzSzftp-sop.inria.frzSzrodeozSzedur oszSzpubzSzpaperzSzwosbis-01-10-97.ps.gz/d abbous97dynamic.ps> [retrieved on 2003-07-25]
- DUROS ET AL.: "A link-layer tunneling mechanism for unidirectional links" IETF, [Online] March 2001 (2001-03), pages 1-25, XP002251583 INET Retrieved from the Internet: <URL:ftp://ftp.isi.edu/in-notes/rfc3077.tx t> [retrieved on 2003-08-18]

## Description

This invention relates to a method for transmitting routing information in a data network having a unidirectional network link, a data transmission system and routers connected to a unidirectional network link.

The usual routing models for data networks, e.g. the internet, are designed to work properly over bidirectional network links. Known unicast and multicast routing protocols are designed to forward data packets on interfaces from which they have received routing control protocol messages. This means that the routing model in a network node, e.g. a router, which receives a routing information packet via one interface, assumes that the source (sender) of the packet is directly reachable via the same interface. However, this assumption is not valid in a network with unidirectional links. In a network with a unidirectional link, a packet containing routing information may be received via the unidirectional link, but it is not possible to directly transmit packets on that link in the reverse direction to the source of the received packet. Accordingly, unidirectional links cannot be integrated in the network by simply adding them like bidirectional links.

In order to integrate unidirectional network links, UDLR (Unidirectional Link Routing) has been proposed and standardized by the IETF (Internet Engineering Task Force) in RFC (Request For Comments) 3077. In UDLR, a link layer tunneling mechanism (LLTM) is used to enable network nodes, which are directly connected by a unidirectional link, to send datagrams as if they were connected by a bidirectional link. Accordingly, a full bidirectional connectivity is emulated between all nodes that are directly connected by a unidirectional link. A node on the receiving end side of the unidirectional link uses the link layer tunneling mechanism to forward datagrams to nodes on the sending end side of the unidirectional link. The tunneling mechanism is implemented at the link layer of the network interface of every node connected to the unidirectional link. Indeed, LLTM operates over a separate bidirectional IP (Internet Protocol) network link and transmits the encapsulated data packets via this bidirectional network link. DTCP (Dynamic Tunneling Configuration Protocol) enables receivers to dynamically discover the presence of senders attached to a unidirectional link and maintain a list of operational tunnel end points. Senders periodically announce their tunnel end point addresses over the unidirectional link. Receivers listen to these announcements and maintain a list of tunnel end points.

One example for a network comprising a unidirectional link is a satellite network. In a satellite network, one or more feeds (e.g. a router with a satellite network interface) transmit data to a satellite which, in turn, broadcasts the received data to a number of receivers (e.g., a router with a receive-only satellite network interface). The satellite link is a unidirectional link from the feeds to the receivers. If more than one feed is provided, the feeds normally comprise a satellite network interface for sending and receiving, so that data may be transmitted from one feed to another. In order to enable a bidirectional communication between feeds and receivers, the unidirectional network link is virtually extended to be bidirectional using the UDLR protocol. A packet that has to be sent from a receiver to a feed is encapsulated at the receiver, sent to the feed via a bidirectional terrestrial link and decapsulated at the feed. A packet to be sent from a receiver to another receiver is encapsulated at the receiver, sent to the feed via the bidirectional terrestrial link, decapsulated at the feed and then sent to the other receiver via the unidirectional satellite link.

A major problem in a satellite network having many receivers (e.g. 10,000) is the large network traffic caused by the exchange of routing information between network nodes.

In the case that RIP (Routing Information Protocol) is used as unicast routing protocol, receivers and feeds have to periodically exchange routing information, in particular their routing tables. In a large satellite network, the size of the routing tables is a serious problem, because every router in the satellite network must have an entry in every routing table in order to be accessible for all network nodes. The feeds in the network may send their routing tables directly over the satellite link. The receivers have to encapsulate their routing tables and send them to their default feed via the LLTM tunneling of UDLR. The received RIP packets are decapsulated at the feed and broadcast over the satellite link. For that reason, all devices having a receive capability (receivers and feeds in the multiple feed case) receive the routing tables. Since in RIP the routers have to exchange their routing tables every 30 seconds, a huge network traffic is generated on the satellite link and the terrestrial network. This traffic can overload the routers connected to the satellite link. In particular, the receivers which are usually not designed to be very powerful have problems handling the large traffic load.

In the case that OSPF (Open Shortest Path First) is used as routing protocol in the network, a similar flooding of the network with routing information happens. In OSPF, every router in the satellite network establishes an adjacency relation with a designated network router and a backup router. Since feeds are capable of sending and receiving information, they are more suited to be selected as designated and backup routers. OSPF uses "Hello" packets to discover neighbours of network nodes. A router sends "Hello" packets from all interfaces to all its neighbours. Within the satellite network, all routers are considered to be neighbours, so each of them is going to periodically send a "Hello" packet to all the other routers in the network. While the "Hello" messages sent by feeds are broadcasted directly over the satellite link, "Hello" messages sent by the receivers are encapsulated and sent through the terrestrial network to the default feed which, in turn, broadcasts them over the satellite link. In addition, every router floods the network with LSA (Link State Advertisement). These messages are periodically broadcasted in order to establish and maintain a synchronized link state database. Hence, if a large number of receivers are connected to the satellite link, the traffic generated by exchanging routing information is enormous. The satellite link and the terrestrial link may both be stressed heavily by this traffic.

Dabbous et al. "Dynamic Routing in Networks with Unidirectional Links" describes the use of tunnelling as a routing protocol modification solution for the case of unidirectional overlays on top of bidirectional networks.

In Duros et al. "A Link-Layer Tunnelling Mechanism for Unidirectional Links" a mechanism is described which emulates full bidirectional connectivity between all nodes that are directly connected by a unidirectional link, wherein the "receiver" uses a link-layer tunnelling mechanism to forward datagrams to "feeds" over a separate bidirectional IP (Internet Protocol) network.

### SUMMARY OF THE INVENTION:

The object of this invention is to provide a data transmission system, a router and a method for operating a router operable to reduce the network traffic load in a network comprising a unidirectional link, in particular the traffic load caused by the exchange of routing information.

The above object is achieved by the independent claims. The dependent claims refer to preferred embodiments of the invention.

A router (feed) for routing data packets in accordance with the destination address of a data packet comprises one or more first network interfaces for receiving and sending data packets and routing information packets. Every first network interface is connected to a bidirectional link of the data network. A second network interface for sending data packets and routing information is connected to a unidirectional link of the data network.

The data network may be any kind of network which is adapted to transmit data from one network device to another. The bidirectional network links are adapted to transmit data in both directions of the link. A bidirectional network link may comprise a telephone line, an ISDN line, a fiber optical line, a wireless connection and/or any other bidirectional data communication means, e.g. the internet. The unidirectional network link may comprise a satellite link. In this case, the second network interface may be connected to a satellite transmitter which is transmitting data to a data communication satellite. The satellite, in turn, transmits the received data to one or more receivers.

The feed may further comprise routing information means for storing and distributing routing information. Routing information is any kind of information which is used by the router to determine the route of a data packet in the network. The routing information may be entered into the router by a terminal device. The routing information means may also generate routing information based on received routing information packets. The received routing information packets have suitably been generated by other routers in the network and distributed therein. Preferably, routing information comprises RIP routing tables and/or OSPF link state information. The routing information may be distributed in the network based on unicast or multicast routing protocols, in particular RIP (Routing Information Protocol), OSPF (Open Shortest Path First) and/or PIM (Protocol Independent Multicast).

A routing unit may determine an outgoing network interface for a received data packet in accordance with the destination address of the packet. In IP (Internet Protocol), for example, the destination address is included in the data packet. The routing unit determines the outgoing network interface and, hence, the continuative network link connected thereto, based on the destination address and the stored routing information. Accordingly, the data packet is travelling in the network, wherein the route of the data packet in the network is selected at the routing devices in the network.

Filtering means are provided in the feed to filter the routing information which is to be sent via the second network interface and the unidirectional network link to devices (receivers) at the receiving end side of the unidirectional network link. By filtering the routing information before sending it via the unidirectional network link, it is prevented that the receivers send data packets on network interfaces connected to the unidirectional network link, as receivers in the prior art would do, because they have received routing information via these network interfaces. Since in the present invention the receivers filter the routing information received via the unidirectional network link, the receivers do not send data packets in the reverse direction of the unidirectional network link via the network interface which is connected to the unidirectional network link. In order to send packets to the feed or other receivers, the receiver must use the routing information which it has received via other network interfaces. Accordingly, the receiver sends data packets directly via bidirectional network links to the feed or other receivers without employing a tunneling mechanism.

This becomes particularly important for a communication between a source receiver and a destination receiver. Using UDLR as in the prior art, the data packet is sent via the bidirectional terrestrial network link to the default feed and then broadcast by the default feed via the satellite link to the destination receiver. In the present invention, however, the data packet is transmitted directly from the source receiver to the destination receiver without the intervention of a feed and without occupying satellite bandwidth.

The routing information means may comprise storing means to store a routing table. The routing table may have entries corresponding to packet destination addresses. The routing information means may further comprise a routing information packet generation means to generate routing information packets based on the stored routing information. A routing information packet may comprise parts of the routing information of a router or the entire routing information of the router. Routing information may be, e.g., distance vectors, link state information, or any other information that may be used to determine the route of a packet in a network. A router may distribute the routing information packets to other routers in the network. The routing information packets are preferably generated based on the entries of the routing table. Preferred routing information packets are RIP packets or OSPF packets.

The filtering means may be adapted to filter the routing information stored in the routing table. Based on the filtered routing information, the routing information packet generation means may generate the routing information packets which are sent via the unidirectional network link to the receivers. Routing information packets which are to be sent to other network devices via the first network interface and bidirectional links may be generated from unfiltered routing information.

The filtering means may also be adapted to remove specified routing information which has been generated by the routing information packet generation means. The filtered routing information packets are then sent via the second network interface to the receivers at the receiving end side of the unidirectional network link. This has the advantage that the filtering of routing information may be performed by conventional packet filtering means, e.g., an IP firewall. Routing information packets for other network devices may be sent without filtering via the first network interface.

Filtering a routing information packet may also mean modifying the content of the routing information packet. E.g., filtering a RIP packet could consist in removing all the information conveyed by the distance vector, part of the information conveyed by the distance vector or removing no information conveyed by the distance vector. Filtering a routing information packet could therefore result in either discarding the packet, not touching the packet, or removing a part of the content of the packet depending on a criterion which is based on a property of the packet, e.g., the destination address of the packet.

According to the invention, the router may comprise a filtering control module which detects the number of routers transmitting data via the unidirectional network link. In a satellite network, multiple feeds may transmit data to the satellite which, in turn, broadcasts the data received from the feeds to the receivers.

The filtering control module may control the filtering means in accordance with the detected number of routers which transmit data to the satellite. In a multi-feed satellite network, it is suitable to transmit routing information between the feeds over the satellite link. Accordingly, the filtering control module may disable the filtering means in the feeds, if more than one feed is transmitting data to the satellite. The detection of the number of active feeds in the satellite network may be performed by evaluating the DTCP "Hello" message. In UDLR, all feeds periodically send DTCP "Hello" messages to all receivers via the satellite link. Accordingly, detecting the DTCP "Hello" message provides "the number of feed bidirectional IP addresses" and indicates how many active feeds are attached to the satellite link.

A router according to the invention provides an effective mechanism to set up a filter which reduces the traffic of routing information exchange over a unidirectional link. An automatic switching of the filtering policy according to the number of feeds is particularly useful in networks having a large number of routers. It simplifies the set up, operation and maintenance of the network because no manual interaction of the network operator is required. In addition, an automatic switching of the filtering policy enables a dynamic network, wherein the number of (active) feeds is changing over time. The routers automatically switch between the single feed mode and the multiple feed mode based on the number of feeds detected by the DTCP messages.

In order to receive routing information in a multiple feed network, the network interfaces of a feed may be arranged to send data to and receive data from the unidirectional network link. Preferably, a third network interface, which is adapted to receive data from the unidirectional link, may be provided in the feed. In this case, the feed is able to send data via the satellite link to receivers and other feeds, and the feed is able to receive data which has been sent by other feeds via the satellite link.

A router (receiver) for routing data packets in accordance with a destination address comprises one or more first network interfaces for receiving and sending data packets and routing information packets, wherein the first network interfaces are connected to bidirectional network links. A second network interface for receiving data packets and routing information is connected to the receiving end of a unidirectional network link. Routing information means for storing and distributing routing information and a routing unit for determining an outgoing network interface for a received data packet in accordance with the destination address of the packet may be provided.

The second network interface may be connected to a satellite receiver receiving data from a satellite which is part of a unidirectional satellite link.

In the receiver, filtering means are adapted to filter routing information which has been received by the second network interface. Even in a single feed network, the filtering of routing information at the receiver's side of the unidirectional network link may optionally be performed to make sure that the routing information means do not receive unneeded routing information via the second network interface and the unidirectional network link. This is to prevent the routing unit to determine the second network interface as an outgoing network interface for a received data packet. Instead, the data packet is routed to its destination by using routing information which has been received via one of the first network interfaces. Accordingly, the data packet is outputted to one of the bidirectional network links and transmitted to its destination via the bidirectional part of the network without the need of tunneling. The present invention saves a detour of the data packet being sent to the default feed and then transmitted via the satellite link to another receiver, as in UDLR.

Filtering routing information received by the receiver is particularly useful in a multiple feed network because, in this case, filtering routing information in the feeds is not suitable. In a multiple feed network, it is advantageous to transmit routing information between feeds in order to maintain the accessibility of all devices in the network.

The routing information means preferably comprise storing means to store a routing table having entries corresponding to packet destination addresses. The filtering means may be adapted to filter routing information packets received by the second network interface. In this case, the routing information means may add entries to the routing table on the basis of the filtered routing information packets, e.g. based on the routing information packets which have not been discarded by the filtering means.

A receiver may further comprise a filtering control module to detect the number of feeds transmitting data via the unidirectional network link. The filtering control module may control the filtering means in accordance with the detected number of feeds. Preferably, the filtering control module disables the filtering means, if a single feed transmits data via the unidirectional network link. In this case, the filtering of routing information should be performed in the feed. For reliability, an optional filtering may be performed in the receiver.

The filtering means may be adapted to filter routing information based on specified destination addresses for routing information packets, in particular predetermined IP multicast addresses which are used by IP to distribute routing information. The filtering means preferably filter RIP multicasts (224.0.0.9), OSPF "Hello" multicasts (224.0.0.5) and OSPF LSA multicasts (224.0.0.6). These multicast packets are used by RIP and OSPF to distribute routing information, e.g., distance vectors, link state information, etc.

In order to enable a bidirectional communication between network devices (feeds and receivers), tunneling means for establishing a reverse network link in the reverse direction to the unidirectional network link may be provided. The tunneling means may be arranged to tunnel packets between the network devices. The tunneling means preferably operate on the link layer of the network, in particular based on UDLR (Unidirectional Link Routing), LLTM (Link Layer Tunneling Mechanism) and/or DTCP (Dynamic Tunneling Configuration Protocol). In the feed, the tunneling means may be arranged to receive tunneled packets sent by other network devices. The tunneled packets are received by means of one of the first network interfaces which is connected to a bidirectional network link. In the receiver, the tunneling means may be arranged to send packets in the reverse direction of the unidirectional network link by means of one of the first network interfaces which is connected to a bidirectional network link.

Providing tunnelling means in the routers may be suitable to supply routing information of receiver networks to the default feed in order to enable a data transfer from the feed to receivers via the satellite link. In order to send such routing information from receivers to the default feed, the tunnelling mechanism may be applied. A receiver may try to send its routing information to all its network interfaces including the network interface attached to the unidirectional link. Because of the tunnelling mechanism the routing information to be sent via the unidirectional link interface is encapsulated at the link layer of this network interface, sent to the default feed via the terrestrial link and decapsulated in the default feed. Therefore, the default feed can receive and store this routing information in its routing table.

The routing unit in the feed and/or receiver may preferably be adapted to determine a plurality of network interfaces for a received multicast data packet and to replicate the data packet in order to forward the data packet to multiple destinations. By this means, the router may perform a multicast routing, e.g., based on PIM (Protocol Independent Multicast). Because PIM is a multicast protocol which is based on unicast routing information (e.g., RIP, OSPF, etc.), the present invention will also apply to PIM and other multicast routings which use unicast routing tables.

According to the present invention, a method for transmitting routing information from a first router (feed) to a second router (receiver) via a unidirectional network link in a data network is provided. The first router is connected at least to the unidirectional network link and arranged to send data packets and routing information via the unidirectional network link. The second router is connected at least to the unidirectional link of the network and arranged to receive data packets and routing information via the unidirectional network link. In order to reduce additional traffic caused by the unidirectional network link, in particular the traffic caused by transmitting routing information, the routing information is filtered when it is transmitted from the first router to the second router.

In case of a single feed transmitting data via the unidirectional network, the filtering of the routing information is performed in the feed; filtered routing information is sent via the unidirectional network link to the receiver; and filtered routing information is received by the receiver.

In case of multiple feeds or, as an optional additional measure, the filtering of the routing information may also be performed in the receiver.

An automatic configuration of the routers in the network may be performed by detecting the number of feeds sending data via the unidirectional network link. If one single feed sending data via the unidirectional network link is detected, filtering is preferably performed by the feed. Otherwise, routing information may be sent from one of the feeds via the unidirectional network link to the receiver and the filtering of the received routing information may be performed by the receiver. Detecting the number of active feeds in the network allows a fully automatic switching between the single feed mode and the multiple feed mode. The detection of the number of active feeds may preferably be performed by evaluating the DTCP "Hello" messages.

Received routing information may be stored in the receiver, in particular in a routing table. The stored routing information may be used in accordance with the destination address of the packet to determine an outgoing network interface for a received data packet. A router may generate routing information from received routing information packets and/or by detecting adjacency relations with other routers or network devices. The routing information may also be based on distance vectors, hop counts and/or link states.

By filtering routing information in the feed and/or the receiver, the present invention reduces the traffic in a network having a unidirectional network link. By filtering the routing information, additional traffic which is caused by an indirect transmission of data packets from a receiver to a non-default feed or other receivers is prevented. Data is directly transmitted to the destination via the bidirectional part of the network. On the other hand, the present invention maintains the major purpose of a unidirectional satellite link: the large bandwidth for transmitting data from the feed(s) to the receivers.

Furthermore, the large traffic caused by transmitting routing information in the network is reduced. In particular, the traffic on the satellite link resulting from the periodical update of routing information of routers in the receiver networks is reduced. Since these updates are very frequent and the volume of routing information to be exchanged is considerable, the load of the satellite link is clearly reduced.

The present invention may not only be applied to network routers, but also to other network devices which generate, maintain and/or distribute routing information in the network, e.g., layer-3 switches.

These and other potential objects, features and advantages of the present invention will appear more fully from the following detailed description of preferred embodiments of the invention. It is to be understood, however, that the scope of the present invention is not limited by a given embodiment shown in the accompanying drawings, wherein
Fig. 1 schematically illustrates a data transmission system according to the present invention;
Fig. 2 shows an exemplary structure of a satellite network;
Fig. 3 schematically illustrates a feed in the single feed mode;
Fig. 4 schematically illustrates a receiver in the single feed mode;
Fig. 5 schematically illustrates a feed in a multiple feed mode;
Fig. 6 schematically illustrates a receiver in a multiple feed mode;
Fig. 7 schematically shows the hardware structure of a feed;
Fig. 8 schematically shows the hardware structure of a receiver;
Fig. 9 is a flowchart illustrating an operation of a feed; and
Fig. 10 is a flowchart illustrating an operation of a receiver.

It is to be understood that the Figures and descriptions of the present invention have been simplified to illustrate the elements that are relevant for a clear understanding of the present invention, while eliminating - for purposes of clarity - other elements that may well be known. Those of ordinary skill in the art will recognize that other elements are desirable and/or required in order to implement the present invention. However, because such elements are well known in the art, and because they do not facilitate a better understanding of the present invention, a discussion of such elements is not provided herein.

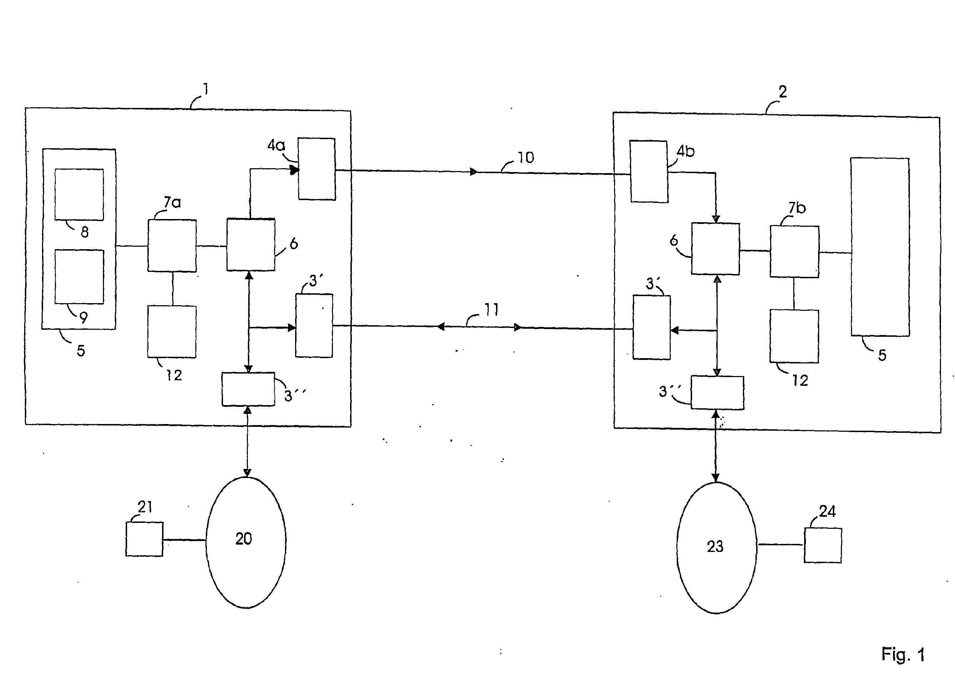

Figure 1 schematically shows the present invention. A router (feed) 1 for routing data packets in a data network comprises a first network interface 3' for receiving and sending data packets and routing information packets. The first network interface 3 is connected to a bidirectional network link 11. The first network interface 3" is connected to a local network 20 which may comprise additional routers or hosts 21. A second network interface 4a for sending data packets and routing information is connected to a unidirectional network link 10.

A routing unit 6 determines an outgoing network interface for a received data packet in accordance with the destination address which is attached to the data packet and routing information which is stored in routing information means 5. Data packets received by the feed 1 via one of the first network interfaces 3', 3" are forwarded by the routing unit 6 to an outgoing network interface in accordance with the destination address of the packet and the stored routing information. E.g., a data packet received from the bidirectional network link 11 via the interface 3' is forwarded to network interface 3", if the data packet is addressed to a host 21 which is connected to the network 20.

The routing information means 5 comprise storing means 8 to store a routing table. The routing table has entries corresponding to destination addresses of data packets. In the routing table, the outgoing network interface for a particular destination address and additional information corresponding to a distance vector, the number of hops to the destination, and/or a link state are listed. Routing information may be generated by the routing information means 5 based on received routing information packets. These routing information packets comprise routing information collected by other routers in the data network. Routing information packets are exchanged between routers in the data network to distribute routing information among the routers. Routing information may also be generated by the feed 1 based on information corresponding to its neighbours in the network, in particular neighbouring routers. A router may send special purpose packets on all its interfaces to all its neighbours in order to discover adjacency relations with other network devices and/or the link status of a network link.

A routing information packet generation means 9 generates routing information packets based on the entries of the routing table stored in the storing means 8. These routing information packets are distributed by the feed 1 in the data network in order to share the routing information of the feed 1 with other routers in the data network.

Filtering means 7a are adapted to filter the generated routing information packets, before the filtered routing information packets are sent via the second network interface 4a to network devices which are accessible via the unidirectional network link 10. The filtering of routing information packets is preferably performed by removing particular multicast packets having a predetermined destination address. Instead of removing particular routing information packets, it is also possible to modify the contents of the respective routing information packets which are to be sent via the second network interface 4a. For example, routing information packets may be modified in a way that information relating to the route via the unidirectional link 10 is removed or altered, such that the receiving network devices do not send packets in the reverse direction of the unidirectional network link 10 via network interfaces connected to the receiving end of the unidirectional link 10.

A filtering control module 12 detects the number of routers transmitting data via the unidirectional data network link 10. If the number of routers transmitting data via the unidirectional network link 10 is more than one, the filtering control module 12 disables the filtering means 7a, because, in this case, the filtering of routing information is preferably performed in the receiving network devices, e.g., in the receiver 2.

The router (receiver) 2 comprises a second network interface 4b for receiving data packets and routing information from the unidirectional network link 10. Filtering means 7b filter routing information received by the second network interface 4b. Routing information means 5 store routing information on the basis of the filtered routing information packets. The routing unit 6 of the receiver 2 determines an outgoing network interface for a received data packet. A network 23 is connected via a bidirectional network link to the network interface 3". A host 24 is connected to the receiver network 23.

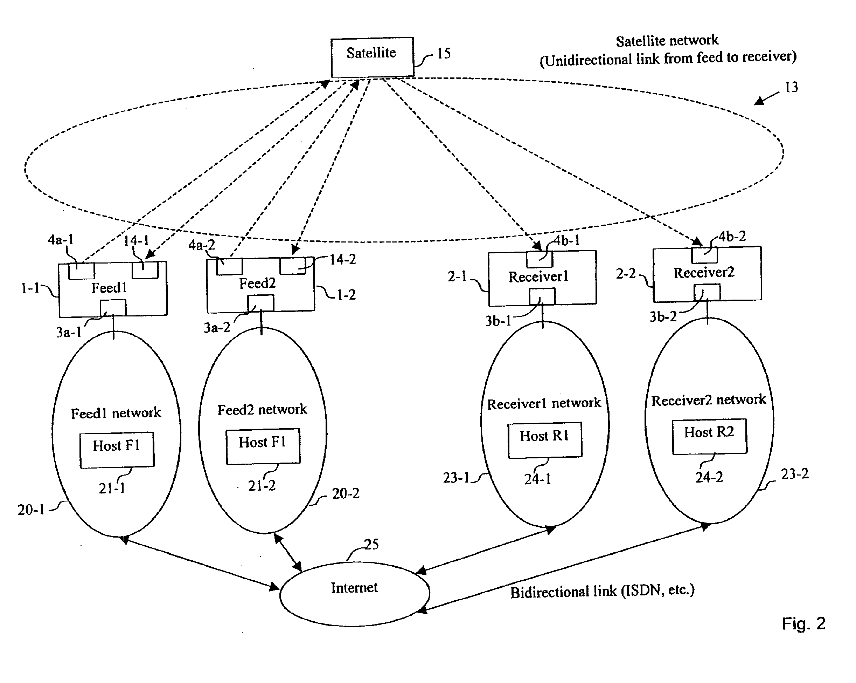

Figure 2 schematically shows the structure of a satellite network. Feeds 1-1, 1-2 are connected via first network interfaces 4a-1, 4a-2 to the uplink section of a unidirectional satellite link 13. Data may be transmitted from the feeds 1-1, 1-2 to the satellite 15 which, in turn, broadcasts the received data to receivers 2-1, 2-2.

In a multifeed scenario, in order to provide a communication link between the feeds 1-1, 1-2, the feeds 1-1, 1-2 comprise a third network interface 14-1, 14-2 which is arranged to receive data from the satellite 15. By this means, a feed 1-1 may receive data which has been transmitted from another feed 1-2 to the satellite 15 and is then broadcast by the satellite 15. Since the data transmission in the satellite network 13 is mainly directed from one of the feeds 1-1, 1-2 to the receivers 2-1, 2-2, the satellite network 13 is considered to be a unidirectional network link (although a bidirectional feed-to-feed communication may also be possible).

The feeds 1-1, 1-2 are connected via their respective first network interfaces 3a-1, 3a-2 to networks 20-1, 20-2. The feed networks 20-1, 20-2 are bidirectionally connected to the internet 25, either by additional routers not shown in Fig. 2 or by additional first network interfaces of the feeds 1-1, 1-2, similar to the arrangement shown in Fig. 1.

The receivers 2-1, 2-2 receive the data transmitted by the satellite 15 via their second network interfaces 4b-1, 4b-2. The receivers 2-1, 2-2 are respectively connected to the receiver networks 23-1, 23-2 via the bidirectional network interfaces 3b-1, 3b-2. Hosts 24-1, 24-2 are arranged in the receiver networks 23-1, 23-2 which are connected via bidirectional links to the internet 25.

If many receivers (e.g. over 10,000 receivers) and several feeds are connected to a satellite network as shown in Fig. 2, the network traffic generated by the exchange of routing information in the network is very large as will be shown by the following two examples.

In case of using RIP (Routing Information Protocol, defined in RFC 1058 and 1388) as routing protocol, feeds 1 and receivers 2 are obliged to periodically exchange routing information, especially their routing tables. E.g., if there are 10,000 receivers 2 in the satellite network, all the 10,000 receivers 2 have to exchange their routing tables every 30 seconds. This means that in 30 seconds all the routers (feeds or receivers) will have to receive more than 10,000 routing tables and, during this time, every router has to compute its own routing table and send it to its neighbours. Receiving and computing more than 10,000 routing tables in less than 30 seconds is a serious problem. Even if a mechanism is used to uniformly distribute the sending of the routing tables over the period of 30 seconds, a router would still have to receive and compute a routing message every 3 milliseconds. Because every router in the satellite network has an entry in every routing table, the size of the exchanged routing tables is problematic. These two issues will overload the routers connected to the satellite link, in particular the receivers 2 which are usually not designed to be very powerful.

If OSPF (Open Shortest Path First, defined in RFC 1247 and 2328) is used as unicast routing protocol, a designated router and a backup router must be assigned. The satellite network is a broadcast type network, like the ethernet. Feeds are more suited to be selected as designated and backup routers, because they are capable of sending and receiving information. Every router in the satellite network establishes an adjacency relation with the designated router and the backup router. OSPF uses "Hello" packets for neighbour discovery. A router sends these packets on all interfaces to all its neighbours. Since within the satellite network all routers are considered to be neighbours, each router periodically sends a "Hello" packet to all the other routers. Accordingly, every router floods the network with LSAs (Link State Advertisements). These messages are periodically exchanged in order to establish and maintain a synchronized link state database. In case that 10,000 receivers 2 are connected to the satellite link and an average of n routers in the receiver networks 23 are connected to the receivers 2, 10,000 times n LSAs are periodically exchanged between the routers. Because it is the OSPF router that advertises LSA, the number of LSAs which the receivers 2 are going to send to the unidirectional link depends on the number of OSPF routers under the receivers 2.

In addition, there is more routing traffic generated by the OSPF protocol. As already mentioned, OSPF "Hello" packets are exchanged periodically between neighbouring routers. In order to maintain a consistent routing information, a rather small time interval over which these packets should be exchanged is required. For instance, in Windows 2000, the OSPF "Hello" message interval is 10 seconds. If a server does not receive a "Hello" message from a neighbour within 40 seconds, it considers that neighbour inactive. A router connected to the satellite link will therefore receive all the 10,000 "Hello" messages issued by its neighbours within 10 seconds. In addition, the size of the "Hello" messages in this network topology may become important, as it will include almost 10,000 IP addresses.

In order to solve the above-mentioned problems, the present invention filters routing information and reduces routing information traffic and the size of routing tables, while maintaining the routing functionality, i.e., all devices are accessible in the network for all devices.

In the satellite network shown in Fig. 2, the major application of the satellite link is to send data from a host 21-1, 21-2 in a feed network 20-1, 20-2 to a host 24-1, 24-2 in a receiver network 23-1, 23-2. The present invention maintains this data transfer capability in the direction of the unidirectional network link. Concerning the data communication from a receiver 2-1, 2-2 or a host 24-1, 24-2 in a receiver network 23-1, 23-2 to a feed 1-1, 1-2 or a host 21-1, 21-2 in a feed network 20-1, 20-2, or the communication between one receiver 2-1 or host 24-1 in receiver network 23-1 to another receiver 2-2 or host 24-2 in another receiver network 23-2, the present invention provides a routing strategy which is based on routes through the bidirectional part of the network, wherein in the routes are directly applied without any tunneling of data packets.

The filtering of routing information according to the present invention has the following advantages over the prior art UDLR (Unidirectional Link Routing defined in RFC 3077). In UDLR, all packets which should be sent in the reverse direction of the unidirectional link 10 are encapsulated by LLTM (Link Layer Tunneling Mechanism) sent to the default feed 1-1 and decapsulated in the default feed 1-1. This means that, even if there are multiple feeds, the routing information of each receiver is sent only to the default feed 1-1. The default feed 1-1 receives LLTM encapsulated routing tables of all receivers 2-1, 2-2 via the bidirectional link 11. Since the default feed 1-1 knows all necessary routing information, it can send data via the satellite link to all hosts 24-1, 24-2 under the receivers 2-1, 2-2.

If there is only one feed in the satellite network (which also is the default feed), the filtering of routing information can be applied at the feed. This additionally saves traffic load on the satellite link.

If there are multiple feeds and the filtering of routing information is performed in the feeds 1-1, 1-2, a feed 1-2 which is not a default feed cannot send data to a host 24-1, 24-2 under a receiver 2-1, 2-2 via the satellite link, because the feed 1-2 does not receive the routing tables of the receivers 2-1, 2-2. Accordingly, the feed 1-2 does not know how to reach a host 24-1, 24-2 via the satellite link. In this case, the feed 1-2 which is not the default feed is obliged to send data to a host 24-1, 24-2 via the bidirectional link 11. Since this is not desirable for the optimal use of a satellite network, the filtering of routing information should, in this case, not be performed at the feed 1-1. Accordingly, in the multiple feed mode, the filtering of routing information should be performed at the receivers' 2. Since feeds 1 are capable of sending and receiving data from the satellite link, the non-default feed 1-2 can also receive the routing tables from the default feed 1-1 via the satellite link, if the filtering is applied at the receivers 2.

Accordingly, the filtering policy in a feed 1 is as follows:
- in the single feed mode (there is only one feed in the satellite network), an outgoing filter for routing information packets on the satellite interface is applied;
- in the multiple feed mode (there are multiple active feeds in the satellite network), no filtering is required.

The filtering policy in a receiver 2 is as follows:
- in the single feed mode, an incoming filter for routing information packets on a satellite interface may optionally be applied (just for reliability);
- in the multiple feed mode, an incoming filter for routing information packets on a satellite interface is applied.

An automatic configuration between the single feed mode and multiple feed mode can be realized by detecting the number of feeds 1 transmitting data via the satellite link, e.g., using the DTCP (Dynamic Tunneling Configuration Protocol) "Hello" message. In UDLR, all feeds periodically send DTCP "Hello" messages to all receivers 2 via the satellite link 13. Detecting DTCP "Hello" messages provides a means for determining the "number of feed bidirectional IP addresses". This indicates how many feeds 1 are attached to the satellite link 13. This information may be used by the filtering control module 12 to automatically switch the filtering policy. This is particularly useful, if there are many receivers 2 arranged in the satellite network. In this case, it is very difficult to switch the filtering policies of the receivers 2 manually. According to the present invention, each feed 1 and receiver 2 switches the filtering policy automatically and no manual operation is necessary.

According to the present invention, the unicast routing of packets in the network shown in Fig. 2 will be as follows.

For a packet from the host 21-1 in the network 20-1 connected to feed 1-1 to the host 24-1 in the network 23-1 connected to receiver 2-1:

Since feed 1-1 receives all routing tables of all receivers 2, the feed 1-1 knows all receivers 2 connected to the satellite link 13. In addition, the feed 1-1 knows the network route to the hosts 24-1, 24-2 under the receivers 2-1, 2-2. Accordingly, the host 21-1 can send a unicast data packet to the host 24-1 through the satellite link 13. The packet may travel along the following network path: Host 21-1, feed network 20-1, bidirectional network interface 3a-1 of feed 1-1, feed 1-1, unidirectional network interface 4a-1 of feed 1-1, satellite link 13, unidirectional network interface 4b-1 of receiver 2-1, receiver 2-1, bidirectional network interface 3b-1 of receiver 2-1, receiver network 23-1, and host 24-1. In addition thereto, there is also the possibility that the packet is sent via the terrestrial internet link 25 along the following path: host 21-1, feed network 20-1, internet 25, receiver network 23-1, and host 24-1. The actual route for the packet is selected by the routing unit 6 of feed 1-1. The selected route depends on the routing metric and the cost of each route. Normally, the route via the satellite link 13 will be selected, because hop count and cost of the satellite route are usually lower than that of the terrestrial route.

For a packet from the host 24-1 in the network 23-1 of the receiver 2-1 to the host 21-1 in the network 20-1 of feed 1-1:
Since in the present invention the routing information from the feeds 1 is filtered, receivers 2, hosts 24 in the receiver networks 23 and additional routers arranged in the receiver networks 23 do not know the route to the feed networks 20 via the satellite link 13. Therefore, the host 24-1 can send a unicast packet to the host 21-1 only via the bidirectional terrestrial link 11 on the following path: host 24-1, receiver network 23-1, internet 25, feed network 20-1, host 21-1. In a conventional UDLR environment, where no filtering of routing information is applied, two possible routes from host 24-1 to host 21-1 would exist. One route is via the terrestrial link 11 and the other route is via the satellite link 13 with LLTM encapsulation. Indeed, because of LLTM and UDLR, the encapsulated packet would also be sent via the terrestrial link 11.

For a packet from the host 21-1 in the feed network 20-1 to the host 21-2 in the feed network 20-2:
Since this is a multiple feed case, feeds 1 can send and receive routing tables via the satellite link 13. Accordingly, feed 1-1 knows that feed 1-2 is connected to the satellite link 13 by receiving routing information from feed 1-2. Therefore, host 21-1 can send a unicast packet to the host 21-2 through the satellite link 13 on the following route: host 21-1, feed network 20-1, bidirectional interface 3a-1 of feed 1-1, feed 1-1, unidirectional network interface 4a-1, satellite network 13, network interface 14-2 of feed 1-2, feed 1-2, network interface 3a-2, feed network 20-2, and host 21-2. In addition thereto, there is also the possibility that host 21-1 transmits data to host 21-2 via the terrestrial network link 11 (host 21-1, feed network 20-1, internet 25, feed network 20-2, and host 21-2). The actual route will be selected by the routing unit 6 of feed 1-1 depending on the routing metric and the cost of each route. Normally, the route via the satellite link 13 will be chosen, because the hop count and cost of the satellite route 13 is usually lower than the cost of the terrestrial route.

For a packet from the host 24-1 in the receiver network 23-1 of receiver 2-1 to the host 24-2 in the receiver network 23-2 of receiver 2-2:
Since in the present invention the routing information from the feeds 1, including the routing tables of all receivers 2, is filtered, the receiver 2-1, the host 24-1 and additional routers in the receiver network 23-1 do not know the route to the receiver network 23-2 via the satellite link 13. Therefore, host 24-1 can send unicast packets to the host 24-2 only via the terrestrial link 11 (host 24-1, receiver network 23-1, internet 25, receiver network 23-2, and host 24-2). Since in a conventional UDLR environment no filtering is applied, there are two routes available from host 24-1 to host 24-2. One route is via the terrestrial link 11, and the other route is via the satellite link 13 using LLTM encapsulation. Indeed, because of LLTM and UDLR, the encapsulated packet would also be sent to the default feed 1-1 via the terrestrial link 11 and then sent to receiver 2-2 via the satellite link 13. In this case, additional and unnecessary traffic is generated on the satellite link 13. Since in the present invention, the packet is directly transmitted from host 24-1 to host 24-2 via the internet 25, the network load on the satellite link 13 is reduced. This is particularly important for the periodical exchange of routing information which generates a large amount of traffic, as already explained.

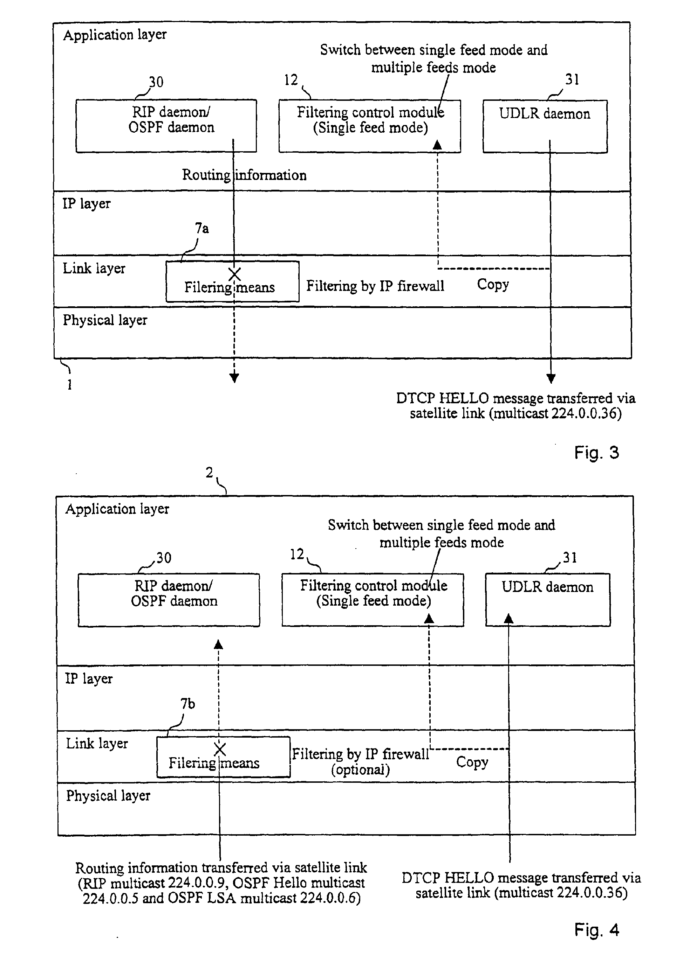

Figure 3 schematically shows the network layer structure and modules of a feed 1 in the single feed mode.

An RIP or OSPF unicast routing daemon 30 generates routing information, e.g., a RIP multicast message (224.0.0.9), an OSPF "Hello" multicast (224.0.0.5) or an OSPF LSA multicast (224.0.0.6). In the single feed mode, routing information packets which are provided to be sent via the second network interface 4a to the unidirectional network link 10 are filtered by the filtering means 7a. This filtering can be implemented, e.g., by using an IP firewall program ("iptables" in LINUX OS or "ipfw" in FreeBSD OS).

The UDLR daemon 31 sends DTCP "Hello" messages using the multicast address 224.0.0.36. The filtering control module 12 copies this message, e.g., by using a link layer socket. The filtering control module 12 checks the "number of feed bidirectional IP addresses" in the copied DTCP "Hello" message and switches between the single feed mode or the multiple feed mode.

Figure 4 schematically shows the network layer structure and modules of a receiver 2 in the single feed mode. In the single feed mode, the filtering means 7b of the receiver 2 may optionally apply the filtering of routing information packets (RIP multicast 224.0.0.9, OSPF "Hello" multicast 224.0.0.5, and OSPF LSA multicast 224.0.0.6) which are received by the second network interface 4b connected the unidirectional link 10. As already mentioned, this filtering is just for guarantee. DTCP "Hello" messages are received the UDLR daemon 31 using the multicast address 224.0.0.36. The filtering control module 12 copies this message and checks the "number of feed bidirectional IP addresses" in the received DTCP "Hello" message. According to the number of feeds detected, the filtering control module 12 switches between the single feed mode and the multiple feed mode.

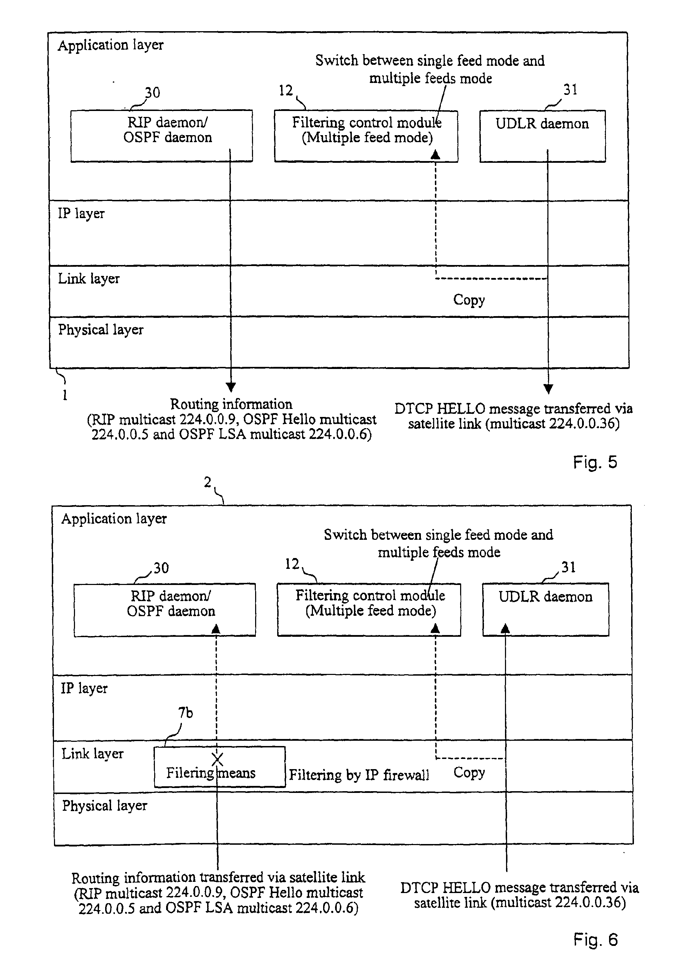

Figure 5 schematically shows the network layer structure and modules of a feed 1 in the multiple feed mode. In the multiple feed mode, the filtering control module 12 disables the filtering of routing information. Routing information generated by the RIP or OSPF daemon 30 is sent on all interfaces including the satellite link. This is necessary for exchanging routing information between feeds 1 in the multiple feed mode.

Figure 6 schematically shows the network layer structure and modules of a receiver 2 in the multiple feed mode. In the multiple feed mode, the filtering control module 12 of the receiver 2 enables the filtering of routing information packets which are received via the network interface 4b from the unidirectional link 10.

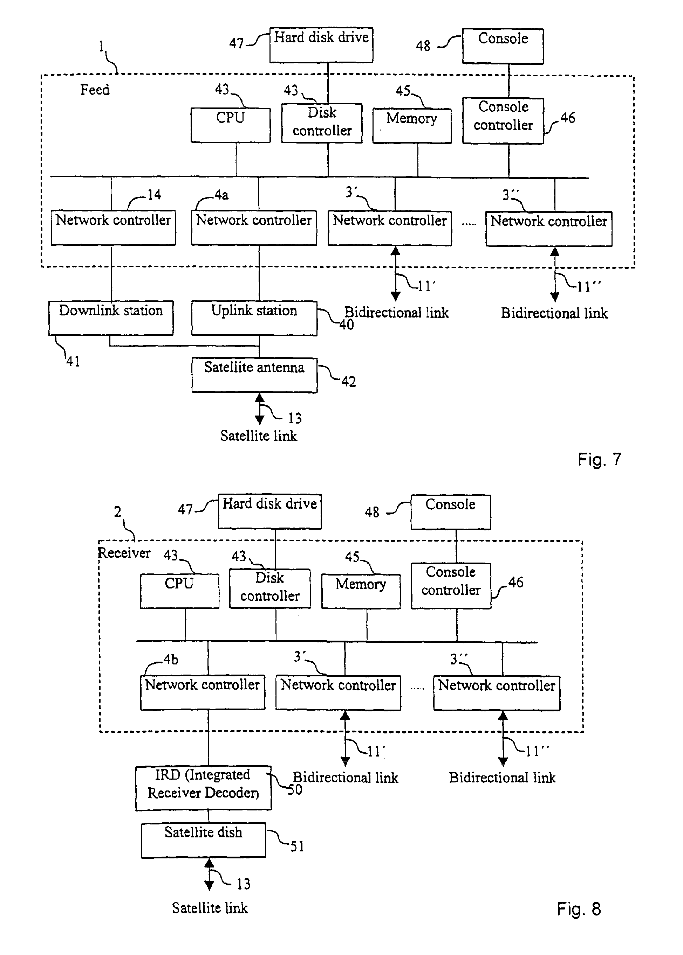

Figure 7 schematically shows the hardware structure of a feed 1. The feed 1 is a router connected to the uplink station 40 and the downlink station 41 of a satellite network 13. The uplink station 40 and the downlink station 41 are connected to a satellite antenna 42. The uplink station 40 is connected to the unidirectional network interface 4a for sending data packets and routing information via the unidirectional network link 10.

The downlink station 41 is connected to the network interface 14 which is arranged to receive data from the satellite network 13. Of course, the network inerfaces 4a for sending and 14 for receiving data to/from the satellite 15 may be integrated in one combined network interface for sending and receiving. In this case, all data transmission with the satellite 15 is performed via the combined network interface.

First network interfaces 3', 3" for receiving and sending data packets and routing information are connected to bidirectional network links 11', 11".

The feed 1 may further comprise a CPU 43, a disk controller 44, a memory 45, and/or a console controller 46. A hard disk drive 47 and/or a console 48 may also be connected to the feed 1.

Figure 8 schematically shows the hardware structure of a receiver 2. A network interface 4b for receiving data packets and routing information is connected to an IRD (Integrated Receiver Decoder) 50. The IRD 50 is connected to a satellite dish 51 for receiving signals from the satellite 15.

Network interfaces 3', 3" for receiving and sending data packets and routing information packets via bidirectional network links are also provided.

The receiver 2 may further comprise a CPU 43, a disk controller 44, a memory 45, and/or a console controller 46. A hard disk drive 47 and/or a console 48 may also be connected to the receiver 2.

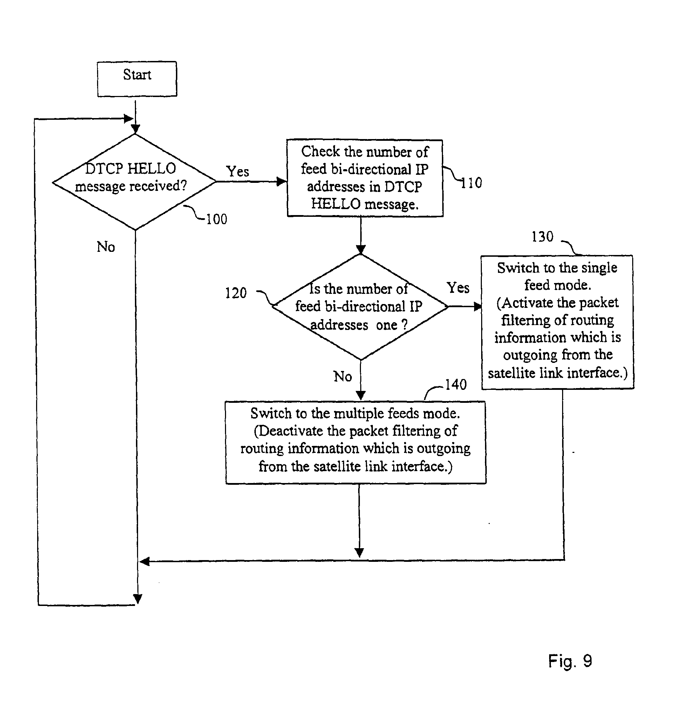

Fig. 9 is a flowchart illustrating the operation of the filtering control module 12 in a feed 1.

In step 100, it is decided, if a DTCP "Hello" message has been received. If a DTCP "Hello" message has been received, the process branches to step 110 in order to check the "number of feed bidirectional IP addresses" in the received DTCP "Hello" message.

In step 120, it is decided, if the "number of feed bidirectional IP addresses" is one. In the affirmative case, the process branches to step 130 in order to switch to the single feed mode. In step 130, the packet filtering for routing information which is outgoing to the satellite link interface is activated.

If more than one feeds are detected by examining the DTCP "Hello" message, the filtering control module 12 switches to the multiple feed mode. In step 140, the packet filtering of routing information which is outgoing to the satellite link interfaces is deactivated.

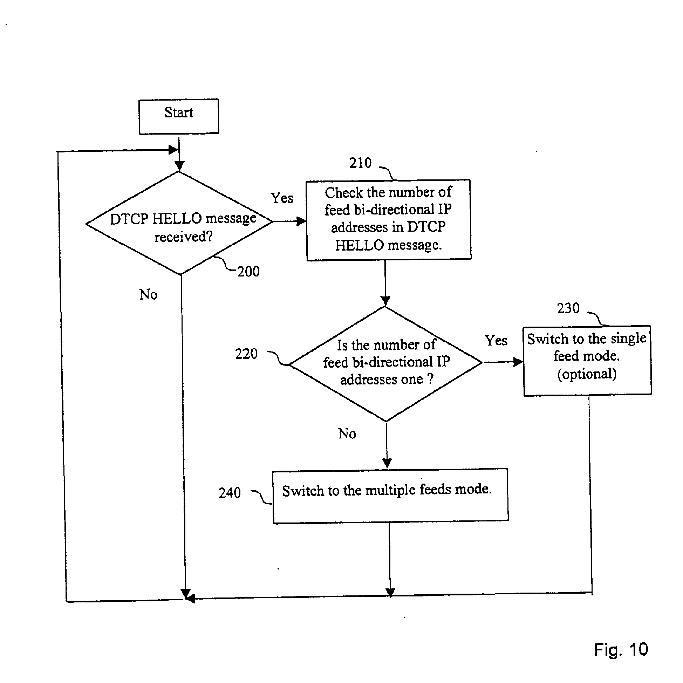

Figure 10 is a flowchart illustrating the operation of the filtering control module 12 of a receiver 2.

In step 200, it is determined, if a DTCP "Hello" message has been received.

In the affirmative case, the "number of feed bidirectional IP addresses" in the received DTCP "Hello" message is examined in step 210.

In step 220, it is determined, if the "number of feed bidirectional IP addresses" is one.

If the number of feed bidirectional IP addresses is one, the filtering control module 12 switches to the single feed mode in step 230. The packet filtering of routing information which is coming in from the satellite link interface is activated. This step is optional.

In step 240 the multiple feed mode is set. The filtering of routing information which is coming in from the satellite link interface is activated.

It is to be understood that the present invention may be applied not only to unidirectional satellite links, but also to a bidirectional link environment. It is obvious to the man skilled in the art, that it can also be applied to conventional terrestrial links.

It is also to be understood that the present invention is not restricted to unicast routing (as has been explained, e.g., for RIP and OSPF). Obviously, the present invention may also be applied to multicast routing, e.g., PIM.

Furthermore, it is to be understood that the present invention is not restricted to conventional routers, as it may be applied to all network devices which generate, maintain and/or distribute routing information.

Obviously, the present invention may also be applied to, e.g., layer-3 switches or other devices performing routing and/or switching operations in a data network.

## Claims

1. Data transmission system for reducing a network traffic load in a network comprising a unidirectional link comprising:
a first router (1, 1-1) for routing data packets in accordance with a destination address, comprising
- a first network interface (3) for receiving and sending data packets and routing information packets, connected to a bidirectional network link (11),
- a second network interface (4a) for sending data packets and routing information, connected to a unidirectional network link (10),
- routing information means (5) for storing and distributing routing information, and
- a routing unit (6) for determining an outgoing network interface (3, 4) for a received data packet in accordance with the destination address of the packet and based on the stored routing information,
a second router (2, 2-1) for routing data packets in accordance with a destination address, comprising
- a first network interface (3) for receiving and sending data and routing information packets, connected to a bidirectional network link (11),
- a second network interface (4b) for receiving data and routing information, connected to the unidirectional network link (10),
- routing information means (5) for storing and distributing routing information, and
- a routing unit (6) for determining an outgoing network interface (3, 4) for a received data packet in accordance with the destination address of the packet and based on the stored routing information,
wherein filtering means (7a, 7b) for filtering including modifying, removing and/or not touching part or all the routing information are provided in the first and second router (1, 2);
**characterized in that**
filtering control modules (12) for detecting the number of first routers (1) and for controlling the filtering means (7a, 7b) in accordance with the detected number of first routers (1) are provided in the first and second router (1, 2); wherein
the filtering means (7a) in the first router (1) are enabled and the filtering means (7b) in the second router (2) are disabled, if a single first router (1) is detected by the filtering control modules (12); and the filtering means (7b) in the second router (2) are enabled and the filtering means (7a) in the first router (1) are disabled, if more than one first router (1) is detected by the filtering control modules (12).

2. Data transmission system according to claim 1, wherein the filtering means (7a) are provided in the first router (1) and are arranged to filter routing information to be send to the second router (2) via the second network interface (4a).

3. Data transmission system according to claim 1 or 2, wherein the filtering means (7b) are provided in the second router (2) and are arranged to filter routing information received by the second network interface (4b).

4. Data transmission system according to any one of claims 1 to 3, comprising a plurality of first routers (1-1, 1-2) which are connected to the unidirectional network link (10) by means of their second network interfaces (4a-1, 4a-2).

5. Data transmission system according to any one of claims 1 to 4,
wherein the filtering means (7a, 7b) filter routing information based on specified destination addresses of routing information packets, in particular predetermined IP multicast addresses.

6. Data transmission system according to any one of claims 1 to 5,
wherein the first and second router (1, 2) comprise tunnelling means for establishing a reverse network link corresponding to the unidirectional network link (10) by tunnelling packets from the second router (2) to the first router (1) via the bidirectional network link (11).

7. Data transmission system according to claim 6, wherein the tunnelling means are arranged to tunnel packets between the routers (1, 2) on the network link layer, in particular based on Unidirectional Link Routing, UDLR, Link Layer Tunnelling Mechanism, LLTM and/or Dynamic Tunnelling Configuration Protocol, DTCP.

8. Data transmission system according to any one of claims 1 to 7,
wherein routing information is exchanged between routers (1, 2) based on unicast routing protocols, in particular Routing Information Protocol, RIP and/or Open Shortest Path First, OSPF.

9. Data transmission system according to any one of claims 1 to 8,
wherein the unidirectional network link (10) is a satellite link (13).

10. Router (feed) for reducing a network traffic load in a network comprising a unidirectional link for routing data packets in data network in accordance with a destination address, comprising
- one or more first network interfaces (3', 3") for receiving and sending data packets and routing information packets, said first network interfaces (3', 3") being connected to bidirectional network links (11', 11"),
- a second network interface (4a) for sending data packets and routing information, said second network interface (4a) being connected to a unidirectional network link (10),
- routing information means (5) for storing and distributing routing information, and
- a routing unit (6) for determining an outgoing network interface (3, 4) for a received data packet in accordance with the destination address of the packet, wherein the routing unit (6) determines the outgoing network interface (3, 4) based on the stored routing information,
wherein filtering means (7a) for filtering including modifying, removing and/or not touching part or all the routing information to be send via the second network interface (4a) are provided;
**characterized by** further comprising
a filtering control module (12) which detects the number of routers transmitting data via the unidirectional network link (10), and which controls the filtering means (7a) in accordance with the detected number of routers, wherein the filtering control module (12) disables the filtering means (7a), if more than one router is transmitting data via the unidirectional network link (10) and enables the filtering means (7a), if a single first router (1) is detected.

11. Router according to claim 10, comprising tunneling means for establishing a reverse network link corresponding to the unidirectional network link (10) in order to enable a bidirectional communication to network devices.

12. Router according to claim 10 or 11, wherein the routing information means (5) comprise storing means (8) to store a routing table having entries corresponding to packet destination addresses, and wherein the routing information means (5) comprise routing information packet generation means (9) to generate routing information packets based on the entries of the routing table.

13. Router according to claim 12, wherein the filtering means (7a) are adapted to filter the routing information stored in the routing table, and wherein the routing information packet generation means (9) generate routing information packets based on the filtered routing information.

14. Router according to claim 12, wherein the filtering means (7a) are adapted to remove specified routing information packets generated by the routing information packet generation means (9), and wherein the router (1) sends the filtered routing information packets via the second network interface (4a) to network devices.

15. Router according to any one of claims 10 to 14, wherein the second network interface (4a) is arranged to send data to the unidirectional network link.

16. Router according to any one of claims 10 to 15, wherein the second network interface (4a) is connected to a satellite transmitter transmitting data to a satellite (15).

17. Router (receiver) for reducing a network traffic load in a network comprising a unidirectional link and for routing data packets in a data network in accordance with a destination address, comprising
- one or more first network interfaces (3', 3") for receiving and sending data packets and routing information packets, said first network interfaces (3', 3") being connected to bidirectional network links (11', 11 "),
- a second network interface (4b) for receiving data packets and routing information, said second network interface (4b) being connected to a unidirectional network link (10),
- routing information means (5) for storing and distributing routing information, and
- a routing unit (6) for determining an outgoing network interface (3, 4) for a received data packet in accordance with the destination address of the packet, wherein the routing unit (6) determines the outgoing network interface (3, 4) based on the stored routing information, wherein
filtering means (7b) for filtering including modifying, removing and/or not touching part or all the routing information received by the second network interface (4b) are provided;
**characterized by** further comprising
a filtering control module (12) which detects the number of routers transmitting data via the unidirectional network link (10), and which controls the filtering means (7b) in accordance with the detected number of routers, wherein the filtering control module (12) disables the filtering means (7b), if a single router (1) transmits data via the unidirectional network link (10) and enables the filtering means (7b), if more than one router is detected.

18. Router according to claim 17, comprising tunnelling means for establishing a reverse network link corresponding to the unidirectional network link (10) in order to enable a bidirectional communication to network devices.

19. Router according to claim 17 or 18, wherein
the routing information means (5) comprise storing means (8) to store a routing table having entries corresponding to packet destination addresses,
the filtering means (7b) are adapted to filter specified routing information packets received by the second network interface (4b), and
the routing information means (5) add entries to the routing table on the basis of the filtered routing information packets.

20. Router according to any one of claims 17 to 19, wherein the second network interface (4b) is connected to a satellite receiver receiving data from a satellite (15) .

21. Router according to any one of claims 10 to 20, wherein the filtering means (7a, 7b) are adapted to filter routing information based on a specified destination address for routing information packets, in particular predetermined IP multicast addresses.

22. Router according to any one of claims 10 to 21, wherein routing information is distributed in the network based on unicast routing protocols, in particular Routing Information Protocol, RIP and/or Open Shortest Path First, OSPF.

23. Router according to any one of claims 10 to 22, wherein the routing unit (6) determines a plurality of network interfaces (3, 4) for a received multicast data packet and replicates the data packet in order to forward the data packet to multiple destinations.

24. Router according to any one of claims 10 to 23, wherein the routing information means (5) generate routing information based on received routing information packets.

25. Method for reducing a network traffic load in a network comprising a unidirectional link and for transmitting routing information in a data network from a first router (1, 1-1) to a second router (2, 2-1) via a unidirectional network link (10),
wherein the first router (1) is connected to a bidirectional network link (11) and arranged to receive and send data packets and routing information via the bidirectional link (11) and the first router (1) is connected to the unidirectional network link (10) and arranged to send data packets and routing information via the unidirectional network link (10), and
wherein the second router (2) is connected to a bidirectional network link (11) and arranged to receive and send data packets and routing information via the bidirectional network link (11) and the second router (2) is connected to the unidirectional network link (10) and arranged to receive data packets and routing information via the unidirectional network link (10),
wherein the routing information is filtered when it is transmitted from the first router (1) to the second router (2);
**characterized by**
- detecting the number of first routers (1-1, 1-2) sending data via the unidirectional network link (10); wherein,
- if only one first router (1-1) sending data via the unidirectional network link (10) is detected, the first router (1-1) is filtering including modifying, removing and/or not touching part or all the routing information using filtering means (7a) sending routing information from the one detected first router (1-1, 1-2) via the unidirectional network link (10) to the second router (2) and receiving the routing information by the second router (2); and
- if more than one first router (1-1, 1-2) sending data via the unidirectional network link (10) is detected, the second router (2) is filtering routing information using the filtering means (7b) sending the routing information from the first routers (1-1, 1-2) via the unidirectional network link (10) to the second router (2) and receiving the routing information by the second router (2).

26. Method according to claim 25, comprising:
- filtering the routing information in the first router (1);
- sending the filtered routing information via the unidirectional network link (10) to the second router; and
- receiving the filtered routing information by the second router (2).

27. Method according to claim 25 or 26, wherein a plurality of first routers (1-1, 1-2) are provided, and wherein the method comprises:
- sending routing information from one of the first routers (1-1, 1-2) via the unidirectional network link (10) to the second router (2);
- receiving the routing information by the second router (2); and
- modifying the received routing information by the second router (2).

28. Method according to any one of claims 25 to 27, wherein the filtering of routing information is performed based on a specified destination address for routing information packets, in particular predetermined IP multicast addresses.

29. Method according to any one of claims 25 to 28, comprising:
generating routing information from received routing information packets.

30. Method for reducing a network traffic load in a network comprising a unidirectional link and for operating a router (1, 1-1) in a data network based on stored routing information, wherein the router (1) is connected at least to a unidirectional network link (10) and arranged to send data packets and routing information via the unidirectional network link (10) to network devices and the router (1) is connected to a bidirectional network link (11) and arranged to receive and send data packets and routing information via the bidirectional network link (11), the method comprising:
- filtering including modifying, removing and/or not touching part or all the stored routing information by filtering means (7a); and
- sending the filtered routing information via the unidirectional network link (10) to one or more of the network devices;
**characterized by**
- detecting the number of routers (1) transmitting data via the unidirectional network link (10);
- disabling the filtering of routing information by the filtering means (7a), if more than one router (1) is transmitting data via the unidirectional network link (10); and
- enabling the filtering by the filtering means (7a), if a single router (1) is detected.

31. Method according to claim 30, wherein routing information packets are generated from the filtered routing information and send via the unidirectional network link (10).

32. Method according to claim 30, comprising:
- generating routing information packets based on the stored routing information;
- filtering the generated routing information packets; and
- sending the filtered routing information packets via the unidirectional network link.

33. Method according to any one of claims 30 to 32, comprising:
- establishing a reverse network link to a network device by means of a bidirectional network interface (3) in order to enable a bidirectional communication to the network device; and
- receiving packets sent by the network device via the reverse network link.

34. Method for reducing a network traffic load in a network comprising a unidirectional link and for operating a router (2, 2-1) in a data network based on stored routing information, wherein the router (2) is connected at least to a unidirectional network link (10) and arranged to receive data packets and routing information via the unidirectional network link (10) from network devices and the router (2) is connected to a bidirectional network link (11) and arranged to receive and send data packets and routing information via the bidirectional network link (11), the method comprising:
- filtering including modifying, removing and/or not touching part or all the routing information received via the unidirectional network link (10) from network devices by filtering means (7b); and
- updating the stored routing information based on the filtered routing information;
**characterized by**
- detecting the number of routers (1) transmitting data via the unidirectional network link (10);
- disabling the filtering of routing information, if a single router (1) is transmitting data via the unidirectional network link (10); and
- enabling the filtering by the filtering means (7b), if more than one router is detected.

35. Method according to claim 34, comprising:
- establishing a reverse network link to a network device by means of a bidirectional network interface (3) in order to enable a bidirectional communication to the network device; and
- sending packets in the reverse direction of the unidirectional network link (10) via the reverse network link to the network device.

36. Method according to any one of claims 30 to 35, wherein the modifying of routing information is performed based on a specified destination address for routing information packets, in particular predetermined IP multicast addresses.

## Patentansprüche

1. Datenübertragungssystem zum Reduzieren einer Netzverkehrsbelastung in einem Netz, das eine unidirektionale Übertragungsstrecke umfasst, mit:
einem ersten Router (1, 1-1) zum Lenken von Datenpaketen in Übereinstimmung mit einer Zieladresse, der umfasst:
- eine erste Netzschnittstelle (3) zum Empfangen und Senden von Datenpaketen und von Lenkungsinformationspaketen, die mit einer bidirektionalen Netzübertragungsstrecke (11) verbunden ist,
- eine zweite Netzschnittstelle (4a) zum Senden von Datenpaketen und von Lenkungsinformationen, die mit einer unidirektionalen Netzübertragungsstrecke (10) verbunden ist,
- Lenkungsinformationsmittel (5) zum Speichern und Verteilen von Lenkungsinformationen und
- eine Lenkungseinheit (6) zum Bestimmen einer ausgebenden Netzschnittstelle (3, 4) für ein empfangenes Datenpaket in Übereinstimmung mit der Zieladresse des Pakets und anhand der gespeicherten Lenkungsinformationen, und
einem zweiten Router (2, 2-1) zum Lenken von Datenpaketen in Übereinstimmung mit einer Zieladresse, der umfasst:
- eine erste Netzschnittstelle (3) zum Empfangen und Senden von Daten und von Lenkungsinformationspaketen, die mit einer bidirektionalen Netzübertragungsstrecke (11) verbunden ist,
- eine zweite Netzschnittstelle (4b) zum Empfangen von Daten und von Lenkungsinformationen, die mit der unidirektionalen Netzübertragungsstrecke (10) verbunden ist,
- Lenkungsinformationsmittel (5) zum Speichern und Verteilen von Lenkungsinformationen und
- eine Lenkungseinheit (6) zum Bestimmen einer ausgebenden Netzschnittstelle (3, 4) für ein empfangenes Datenpaket in Übereinstimmung mit der Zieladresse des Pakets und anhand der gespeicherten Lenkungsinformationen,
wobei in dem ersten und in dem zweiten Router (1, 2) Filterungsmittel (7a, 7b) vorgesehen sind, um einen Teil der oder alle Lenkungsinformationen zu filtern, einschließlich des Modifizierens, Entfernens und/oder Unverändertlassens;
**dadurch gekennzeichnet, dass**
in dem ersten und in dem zweiten Router (1, 2) Filterungssteuerungsmodule (12) vorgesehen sind, um die Anzahl erster Router (1) zu erfassen und um die Filterungsmittel (7a, 7b) in Übereinstimmung mit der erfassten Anzahl erster Router (1) zu steuern; wobei
die Filterungsmittel (7a) in dem ersten Router (1) freigegeben werden und die Filterungsmittel (7b) in dem zweiten Router (2) gesperrt werden, falls durch die Filterungssteuermodule (12) ein einziger erster Router (1) erfasst wird; und
die Filterungsmittel (7b) in dem zweiten Router (2) freigegeben werden und die Filterungsmittel (7a) in dem ersten Router (1) gesperrt werden, falls mehr als ein erster Router (1) durch die Filterungssteuermodule (12) erfasst wird.

2. Datenübertragungssystem nach Anspruch 1, wobei die Filterungsmittel (7a) in dem ersten Router (1) vorgesehen sind und dazu ausgelegt sind, Lenkungsinformationen, die zu dem zweiten Router (2) über die zweite Netzschnittstelle (4a) gesendet werden sollen, zu filtern.

3. Datenübertragungssystem nach Anspruch 1 oder 2, wobei die Filterungsmittel (7b) in dem zweiten Router (2) vorgesehen sind und dazu ausgelegt sind, Lenkungsinformationen, die durch die zweite Netzschnittstelle (4b) empfangen werden, zu filtern.

4. Datenübertragungssystem nach einem der Ansprüche 1 bis 3, das mehrere erste Router (1-1, 1-2) umfasst, die mit der unidirektionalen Netzübertragungsstrecke (10) mittels ihrer zweiten Netzschnittstellen (4a-1, 4a-2) verbunden sind.

5. Datenübertragungssystem nach einem der Ansprüche 1 bis 4, wobei die Filterungsmittel (7a, 7b) Lenkungsinformationen anhand spezifizierter Zieladressen von Lenkungsinformationspaketen, insbesondere anhand vorgegebener IP-Multicast-Adressen, filtern.

6. Datenübertragungssystem nach einem der Ansprüche 1 bis 5, wobei der erste und der zweite Router (1, 2) Tunnelungsmittel umfassen, um eine Rückwärtsnetzübertragungsstrecke zu schaffen, die der unidirektionalen Netzübertragungsstrecke (10) entspricht, indem Pakete von dem zweiten Router (2) zu dem ersten Router (1) über die bidirektionale Netzübertragungsstrecke (11) getunnelt werden.

7. Datenübertragungssystem nach Anspruch 6, wobei die Tunnelungsmittel dazu ausgelegt sind, Pakete zwischen den Routern (1, 2) auf der Netzübertragungsstrecken-Schicht, insbesondere auf der Grundlage von Unidirectional Link Routing, UDLR, Link Layer Tunnelling Mechanism, LLTM, und/oder Dynamic Tunnelling Configuration Protocol, DTCP, zu tunneln.

8. Datenübertragungssystem nach einem der Ansprüche 1 bis 7, wobei Lenkungsinformationen zwischen Routern (1, 2) anhand von Unicast-Lenkungsprotokollen, insbesondere anhand des Routing Information Protocol, RIP, und/oder des Open Shortest Path First, OSPF, ausgetauscht werden.

9. Datenübertragungssystem nach einem der Ansprüche 1 bis 8, wobei die unidirektionale Netzübertragungsstrecke (10) eine Satellitenübertragungsstrecke (13) ist.

10. Router (Einspeisung) zum Reduzieren einer Netzverkehrsbelastung in einem Netz, das eine unidirektionale Übertragungsstrecke umfasst, um Datenpakete in einem Datennetz in Übereinstimmung mit einer Zieladresse zu lenken, mit
- einer oder mehreren ersten Netzschnittstellen (3', 3") zum Empfangen und Senden von Datenpaketen und von Lenkungsinformationspaketen, wobei die ersten Netzschnittstellen (3', 3") mit bidirektionalen Netzübertragungsstrecken (11', 11 ") verbunden sind,
- einer zweiten Netzschnittstelle (4a) zum Senden von Datenpaketen und von Lenkungsinformationen, wobei die zweite Netzschnittstelle (4a) mit einer unidirektionalen Netzübertragungsstrecke (10) verbunden ist,
- Lenkungsinformationsmitteln (5) zum Speichern und Verteilen von Lenkungsinformationen und
- einer Lenkungseinheit (6) zum Bestimmen einer ausgebenden Netzschnittstelle (3, 4) für ein empfangenes Datenpaket in Übereinstimmung mit der Zieladresse des Pakets, wobei die Lenkungseinheit (6) die ausgebende Netzschnittstelle (3, 4) anhand der gespeicherten Lenkungsinformationen bestimmt,
wobei Filterungsmittel (7a) vorgesehen sind, um einen Teil der oder alle Lenkungsinformationen, die über die zweite Netzschnittstelle (4a) gesendet werden sollen, zu filtern, einschließlich des Modifizierens, Entfernens und/oder Unverändertlassens;
ferner **gekennzeichnet durch**:
ein Filterungssteuermodul (12), das die Anzahl von Routern erfasst, die Daten über die unidirektionale Netzübertragungsstrecke (10) übertragen, und das die Filterungsmittel (7a) in Übereinstimmung mit der erfassten Anzahl von Routern steuert, wobei das Filterungssteuermodul (12) die Filterungsmittel (7a) sperrt, falls mehr als ein Router Daten über die unidirektionale Netzübertragungsstrecke (10) überträgt, und die Filterungsmittel (7a) freigibt, falls ein einziger erster Router (1) erfasst wird.

11. Router nach Anspruch 10, der Tunnelungsmittel umfasst, um eine Rückwärtsnetzübertragungsstrecke zu schaffen, die der unidirektionalen Netzübertragungsstrecke (10) entspricht, um eine bidirektionale Kommunikation mit Netzvorrichtungen zu ermöglichen.

12. Router nach Anspruch 10 oder 11, wobei die Lenkungsinformationsmittel (5) Speichermittel (8) umfassen, um eine Lenkungstabelle zu speichern, die Einträge besitzt, die Paketzieladressen entsprechen, und wobei die Lenkungsinformationsmittel (5) Lenkungsinformationspaket-Erzeugungsmittel (9) umfassen, um Lenkungsinformationspakete anhand der Einträge der Lenkungstabelle zu erzeugen.

13. Router nach Anspruch 12, wobei die Filterungsmittel (7a) dazu ausgelegt sind, die in der Lenkungstabelle gespeicherten Lenkungsinformationen zu filtern, und wobei die Lenkungsinformationspaket-Erzeugungsmittel (9) Lenkungsinformationspakete anhand der gefilterten Lenkungsinformationen erzeugen.

14. Router nach Anspruch 12, wobei die Filterungsmittel (7a) dazu ausgelegt sind, spezifizierte Lenkungsinformationspakete, die durch die Lenkungsinformationspaket-Erzeugungsmittel (9) erzeugt wurden, zu entfernen, und wobei der Router (1) die gefilterten Lenkungsinformationspakete über die zweite Netzschnittstelle (4a) zu den Netzvorrichtungen sendet.

15. Router nach einem der Ansprüche 10 bis 14, wobei die zweite Netzschnittstelle (4a) dazu ausgelegt ist, Daten zu der unidirektionalen Netzübertragungsstrecke zu senden.

16. Router nach einem der Ansprüche 10 bis 15, wobei die zweite Netzschnittstelle (4a) mit einem Satellitensender verbunden ist, der Daten zu einem Satelliten (15) überträgt.

17. Router (Empfänger) zum Reduzieren einer Netzverkehrsbelastung in einem Netz, das eine unidirektionale Übertragungsstrecke umfasst, und zum Lenken von Datenpaketen in einem Datennetz in Übereinstimmung mit einer Zieladresse, mit
- einer oder mehreren ersten Netzschnittstellen (3', 3") zum Empfangen und Senden von Datenpaketen und von Lenkungsinformationspaketen, wobei die ersten Netzschnittstellen (3', 3") mit bidirektionalen Netzübertragungsstrecken (11', 11 ") verbunden sind,
- einer zweiten Netzschnittstelle (4b) zum Empfangen von Datenpaketen und von Lenkungsinformationen, wobei die zweite Netzschnittstelle (4b) mit einer unidirektionalen Netzübertragungsstrecke (10) verbunden ist,
- Lenkungsinformationsmitteln (5) zum Speichern und Verteilen von Lenkungsinformationen und
- einer Lenkungseinheit (6) zum Bestimmen einer ausgebenden Netzschnittstelle (3, 4) für ein empfangenes Datenpaket in Übereinstimmung mit der Zieladresse des Pakets, wobei die Lenkungseinheit (6) die ausgebende Netzschnittstelle (3, 4) anhand der gespeicherten Lenkungsinformationen bestimmt, wobei Filterungsmittel (7b) vorgesehen sind, um einen Teil der oder alle Lenkungsinformationen, die von der zweiten Netzschnittstelle (4b) empfangen werden, zu filtern, einschließlich des Modifizierens, Entfernens und/oder Unverändertlassens;
ferner **gekennzeichnet durch**:
ein Filterungssteuermodul (12), das die Anzahl von Routern erfasst, die Daten über die unidirektionale Netzübertragungsstrecke (10) übertragen, und das die Filterungsmittel (7b) in Übereinstimmung mit der erfassten Anzahl von Routern steuert, wobei das Filterungssteuermodul (12) die Filterungsmittel (7b) sperrt, falls ein einziger Router (1) Daten über die undirektionale Netzübertragungsstrecke (10) überträgt, und die Filterungsmittel (7b) freigibt, falls mehr als ein Router erfasst wird.

18. Router nach Anspruch 17, der Tunnelungsmittel umfasst, um eine Rückwärtsnetzübertragungsstrecke zu schaffen, die der unidirektionalen Netzübertragungsstrecke (10) entspricht, um eine bidirektionale Kommunikation mit Netzvorrichtungen zu ermöglichen.

19. Router nach Anspruch 17 oder 18, wobei
die Lenkungsinformationsmittel (5) Speichermittel (8) umfassen, um eine Lenkungstabelle zu speichern, die Einträge besitzt, die Paketzieladressen entsprechen,
wobei die Filterungsmittel (7b) dazu ausgelegt sind, spezifizierte Lenkungsinformationspakete, die von der zweiten Netzschnittstelle (4b) empfangen werden, zu filtern, und wobei die Lenkungsinformationsmittel (5) anhand der gefilterten Lenkungsinformationspakete Einträge zu der Lenkungstabelle hinzufügen.

20. Router nach einem der Ansprüche 17 bis 19, wobei die zweite Netzschnittstelle (4b) mit einem Satellitenempfänger verbunden ist, der Daten von einem Satelliten (15) empfängt.

21. Router nach einem der Ansprüche 10 bis 20, wobei die Filterungsmittel (7a, 7b) dazu ausgelegt sind, Lenkungsinformationen anhand einer spezifizierten Zieladresse zum Lenken von Informationspaketen, insbesondere anhand vorgegebener IP-Multicast-Adressen, zu filtern.

22. Router nach einem der Ansprüche 10 bis 21, wobei Lenkungsinformationen in dem Netz anhand von Unicast-Lenkungsprotokollen, insbesondere des Routing Information Protocol, RIP, und/oder des Open Shortest Path First, OSPF, verteilt werden.

23. Router nach einem der Ansprüche 10 bis 22, wobei die Lenkungseinheit (6) mehrere Netzschnittstellen (3, 4) für ein empfangenes Multicast-Datenpaket bestimmt und das Datenpaket kopiert, um das Datenpaket zu mehreren Zielen weiterzuleiten.

24. Router nach einem der Ansprüche 10 bis 23, wobei die Lenkungsinformationsmittel (5) Lenkungsinformationen anhand empfangener Lenkungsinformationspakete erzeugen.

25. Verfahren zum Reduzieren einer Netzverkehrsbelastung in einem Netz, das eine unidirektionale Übertragungsstrecke umfasst, und zum Übertragen von Lenkungsinformationen in einem Datennetz von einem ersten Router (1, 1-1) zu einem zweiten Router (2, 2-2) über eine undirektionale Netzübertragungsstrecke (10),
wobei der erste Router (1) mit einer bidirektionalen Netzübertragungsstrecke (11) verbunden ist und dazu ausgelegt ist, Datenpakete und Lenkungsinformationen über die bidirektionale Übertragungsstrecke (11) zu empfangen und zu senden und der erste Router (1) mit der unidirektionalen Netzübertragungsstrecke (10) verbunden ist und dazu ausgelegt ist, Datenpakete und Lenkungsinformationen über die unidirektionale Netzübertragungsstrecke (10) zu senden, und
wobei der zweite Router (2) mit einer bidirektionalen Netzübertragungsstrecke (11) verbunden ist und dazu ausgelegt ist, Datenpakete und Lenkungsinformationen über die bidirektionale Netzübertragungsstrecke (11) zu empfangen und zu senden, und der zweite Router (2) mit der unidirektionalen Netzübertragungsstrecke (10) verbunden ist und dazu ausgelegt ist, Datenpakete und Lenkungsinformationen über die unidirektionale Netzübertragungsstrecke (10) zu empfangen,
wobei die Lenkungsinformationen gefiltert werden, wenn sie von dem ersten Router (1) zu dem zweiten Router (2) übertragen werden; **gekennzeichnet durch**
- Erfassen der Anzahl erster Router (1-1, 1-2), die Daten über die unidirektionale Netzübertragungsstrecke (10) senden; wobei
- dann, wenn nur ein erster Router (1-1), der Daten über die unidirektionale Netzübertragungsstrecke (10) sendet, erfasst wird, der erste Router (1-1) einen Teil der oder alle Lenkungsinformationen unter Verwendung von Filterungsmitteln (7a), die Lenkungsinformationen von dem einen erfassten ersten Router (1-1, 1-2) über die unidirektionale Netzübertragungsstrecke (10) zu dem zweiten Router (2) senden und die Lenkungsinformationen durch den zweiten Router (2) empfangen, filtert, einschließlich des Modifizierens, Entfernens und/oder Unverändertlassens; und
- dann, wenn mehr als ein erster Router (1-1, 1-2), der Daten über die unidirektionale Netzübertragungsstrecke (10) sendet, erfasst wird, der zweite Router (2) Lenkungsinformationen unter Verwendung der Filterungsmittel (7b), die die Lenkungsinformationen von den ersten Routern (1-1, 1-2) über die unidirektionale Netzübertragungsstrecke (10) zu dem zweiten Router (2) senden und die Lenkungsinformationen **durch** den zweiten Router (2) empfangen, filtert.

26. Verfahren nach Anspruch 25, das umfasst:
- Filtern der Lenkungsinformationen in dem ersten Router (1);
- Senden der gefilterten Lenkungsinformationen über die undirektionale Netzübertragungsstrecke (10) zu dem zweiten Router; und
- Empfangen der gefilterten Lenkungsinformationen durch den zweiten Router (2).

27. Verfahren nach Anspruch 25 oder 26, wobei mehrere erste Router (1-1, 1-2) vorgesehen sind und wobei das Verfahren umfasst:
- Senden von Lenkungsinformationen von einem der ersten Router (1-1, 1-2) über die unidirektionale Netzübertragungsstrecke (10) zu dem zweiten Router (2);
- Empfangen der Lenkungsinformationen durch den zweiten Router (2); und
- Modifizieren der empfangenen Lenkungsinformationen durch den zweiten Router (2).

28. Verfahren nach einem der Ansprüche 25 bis 27, wobei das Filtern der Lenkungsinformationen anhand einer spezifizierten Zieladresse für Lenkungsinformationspakete, insbesondere anhand von vorgegebenen IP-Multicast-Adressen, ausgeführt wird.

29. Verfahren nach einem der Ansprüche 25 bis 28, das umfasst:
Erzeugen von Lenkungsinformationen aus empfangenen Lenkungsinformationspaketen.

30. Verfahren zum Reduzieren einer Netzverkehrsbelastung in einem Netz, das eine unidirektionale Übertragungsstrecke umfasst, und zum Betreiben eines Routers (1, 1-1) in einem Datennetz anhand gespeicherter Lenkungsinformationen, wobei der Router (1) zumindest mit einer unidirektionalen Netzübertragungsstrecke (10) verbunden ist und dazu ausgelegt ist, Datenpakete und Lenkungsinformationen über die unidirektionale Netzübertragungsstrecke (10) zu Netzvorrichtungen zu senden, und wobei der Router (1) mit einer bidirektionalen Netzübertragungsstrecke (11) verbunden ist und dazu ausgelegt ist, Datenpakete und Lenkungsinformationen über die bidirektionale Netzübertragungsstrecke (11) zu empfangen und zu senden, wobei das Verfahren umfasst:
- Filtern eines Teils der oder aller gespeicherten Lenkungsinformationen einschließlich des Modifizierens, Entfernens und/oder Unverändertlassens durch Filterungsmittel (7a); und
- Senden der gefilterten Lenkungsinformationen über die undirektionale Netzübertragungsstrecke (10) zu einer oder zu mehreren der Netzvorrichtungen;
**gekennzeichnet durch**
- Erfassen der Anzahl von Routern (1), die Daten über die undirektionale Netzübertragungsstrecke (10) übertragen;
- Sperren des Filterns von Lenkungsinformationen **durch** die Filterungsmittel (7a), falls mehr als ein Router (1) Daten über die undirektionale Netzübertragungsstrecke (10) überträgt; und
- Freigeben des Filterns **durch** die Filterungsmittel (7a), falls ein einziger Router (1) erfasst wird.

31. Verfahren nach Anspruch 30, wobei Lenkungsinformationspakete aus den gefilterten Lenkungsinformationen erzeugt und über die unidirektionale Netzübertragungsstrecke (10) gesendet werden.

32. Verfahren nach Anspruch 30, das umfasst:
- Erzeugen von Lenkungsinformationspaketen anhand der gespeicherten Lenkungsinformationen;
- Filtern der erzeugten Lenkungsinformationspakete; und
- Senden der gefilterten Lenkungsinformationspakete über die unidirektionale Netzübertragungsstrecke.

33. Verfahren nach einem der Ansprüche 30 bis 32, das umfasst:
- Herstellen einer Rückwärtsnetzübertragungsstrecke zu einer Netzvorrichtung mittels einer bidirektionalen Netzschnittstelle (3), um eine bidirektionale Kommunikation mit der Netzvorrichtung zu ermöglichen; und
- Empfangen von Paketen, die durch die Netzvorrichtung über die Rückwärtsnetzübertragungsstrecke gesendet werden.

34. Verfahren zum Reduzieren einer Netzverkehrsbelastung in einem Netz, das eine unidirektionale Übertragungsstrecke umfasst, und zum Betreiben eines Routers (2, 2-1) in einem Datennetz anhand gespeicherter Lenkungsinformationen, wobei der Router (2) zumindest mit einer unidirektionalen Netzübertragungsstrecke (10) verbunden ist und dazu ausgelegt ist, Datenpakete und Lenkungsinformationen über die unidirektionale Netzübertragungsstrecke (10) von Netzvorrichtungen zu empfangen, und wobei der Router (2) mit einer bidirektionalen Netzübertragungsstrecke (11) verbunden ist und dazu ausgelegt ist, Datenpakete und Lenkungsinformationen über die bidirektionale Netzübertragungsstrecke (11) zu empfangen und zu senden, wobei das Verfahren umfasst:
- Filtern eines Teils der oder aller Lenkungsinformationen, die über die undirektionale Netzübertragungsstrecke (10) von Netzvorrichtungen empfangen werden, einschließlich des Modifizierens, Entfernens und/oder Unverändertlassens, durch Filterungsmittel (7b); und
- Aktualisieren der gespeicherten Lenkungsinformationen anhand der gefilterten Lenkungsinformationen,
**gekennzeichnet durch**
- Erfassen der Anzahl von Routern (1), die Daten über die unidirektionale Netzübertragungsstrecke (10) übertragen;
- Sperren des Filterns der Lenkungsinformationen, falls ein einziger Router (1) Daten über die undirektionale Netzübertragungsstrecke (10) überträgt; und
- Freigeben des Filterns **durch** die Filterungsmittel (7b), falls mehr als ein Router erfasst wird.

35. Verfahren nach Anspruch 34, das umfasst:
- Aufbauen einer Rückwärtsnetzübertragungsstrecke zu einer Netzvorrichtung mittels einer bidirektionalen Netzschnittstelle (3), um eine bidirektionale Kommunikation mit der Netzvorrichtung zu ermöglichen; und
- Senden von Paketen in der Rückwärtsrichtung der unidirektionalen Netzübertragungsstrecke (10) über die Rückwärtsnetzübertragungsstrecke zu der Netzvorrichtung.

36. Verfahren nach einem der Ansprüche 30 bis 35, wobei das Modifizieren von Lenkungsinformationen anhand einer spezifizierten Zieladresse für Lenkungsinformationspakete, insbesondere anhand vorgegebener IP-Multicast-Adressen, ausgeführt wird.

## Revendications

1. Système de transmission de données permettant de réduire une charge de trafic de réseau dans un réseau comprenant une liaison unidirectionnelle comprenant :
un premier routeur (1, 1-1) permettant d'acheminer des paquets de données selon une adresse de destination, comprenant
- une première interface de réseau (3) permettant de recevoir et d'envoyer des paquets de données et des paquets d'informations de routage, connectée à une liaison de réseau bidirectionnelle (11),
- une seconde interface de réseau (4a) permettant d'envoyer des paquets de données et des informations de routage, connectée à une liaison de réseau unidirectionnelle (10),
- des moyens d'informations de routage (5) permettant de stocker et de distribuer des informations de routage, et
- une unité de routage (6) permettant de déterminer une interface de réseau sortante (3, 4) pour un paquet de données reçu selon l'adresse de destination du paquet et sur la base des informations de routage stockées,
un second routeur (2, 2-1) permettant d'acheminer des paquets de données selon une adresse de destination, comprenant
- une première interface de réseau (3) permettant de recevoir et d'envoyer des paquets de données et des paquets d'informations de routage, connectée à une liaison de réseau bidirectionnelle (11),
- une seconde interface de réseau (4a) permettant de recevoir des données et des informations de routage, connectée à la liaison de réseau unidirectionnelle (10),
- des moyens d'informations de routage (5) permettant de stocker et de distribuer des informations de routage, et
- une unité de routage (6) permettant de déterminer une interface de réseau sortante (3, 4) pour un paquet de données reçu selon l'adresse de destination du paquet et sur la base des informations de routage stockées,
dans lequel des moyens de filtrage (7a, 7b) permettant de filtrer, y compris modifier, supprimer et/ou maintenir tel quel, une partie ou l'ensemble des informations de routage sont fournis dans les premier et second routeurs (1, 2) ;
**caractérisé en ce que**
des modules de commande de filtrage (12) permettant de détecter le nombre de premiers routeurs (1) et permettant de commander les moyens de filtrage (7a, 7b) selon le nombre détecté de premiers routeurs (1) sont fournis dans les premier et second routeurs (1, 2) ; dans lesquels
les moyens de filtrage (7a) dans le premier routeur (1) sont activés et les moyens de filtrage (7b) dans le second routeur (2) sont désactivés, si un seul premier routeur (1) est détecté par les modules de commande de filtrage (12) ; et les moyens de filtrage (7b) dans le second routeur (2) sont activés et les moyens de filtrage (7a) dans le premier routeur (1) sont désactivés, si plus d'un premier routeur (1) est détecté par les modules de commande de filtrage (12).

2. Système de transmission de données selon la revendication 1, dans lequel les moyens de filtrage (7a) sont fournis dans le premier routeur (1) et sont conçus pour filtrer les informations de routage devant être envoyées au second routeur (2) par l'intermédiaire de la seconde interface de réseau (4a).

3. Système de transmission de données selon la revendication 1 ou 2, dans lequel les moyens de filtrage (7b) sont fournis dans le second routeur (2) et sont conçus pour filtrer les informations de routage reçues par la seconde interface de réseau (4b).

4. Système de transmission de données selon l'une quelconque des revendications 1 à 3, comprenant une pluralité de premiers routeurs (1-1, 1-2) qui sont connectés à la liaison de réseau unidirectionnelle (10) au moyen de leurs secondes interfaces de réseau (4a-1, 4a-2).

5. Système de transmission de données selon l'une quelconque des revendications 1 à 4, dans lequel les moyens de filtrage (7a, 7b) filtrent les informations de routage sur la base des adresses de destination spécifiées des paquets d'informations de routage, notamment les adresses de multidiffusion IP prédéterminées.

6. Système de transmission de données selon l'une quelconque des revendications 1 à 5, dans lequel les premier et second routeurs (1, 2) comprennent des moyens de tunnellisation permettant d'établir une liaison de réseau inverse correspondant à la liaison de réseau unidirectionnelle (10) en tunnellisant les paquets du second routeur (2) au premier routeur (1) au moyen de la liaison de réseau bidirectionnelle (11).

7. Système de transmission de données selon la revendication 6, dans lequel les moyens de tunnellisation sont conçus pour tunnelliser les paquets entre les routeurs (1, 2) sur la couche de liaison de réseau, notamment sur la base de l'Unidirectional Link Routing (UDLR), du Link Layer Tunnelling Mechanism (LLTM) et/ou du Dynamic Tunnelling Configuration Protocol (DTCP).

8. Système de transmission de données selon l'une quelconque des revendications 1 à 7, dans lequel les informations de routage sont échangées entre les routeurs (1, 2) sur la base de protocoles de routage à diffusion individuelle, notamment le Routing Information Protocol (RIP) et/ou l'Open Shortest Path First (OSPF).

9. Système de transmission de données selon l'une quelconque des revendications 1 à 8, dans lequel la liaison de réseau unidirectionnelle (10) est une liaison par satellite (13).

10. Routeur (source) permettant de réduire une charge de trafic de réseau dans un réseau comprenant une liaison unidirectionnelle permettant d'acheminer des paquets de données dans un réseau de données selon une adresse de destination, comprenant
- une ou plusieurs premières interfaces de réseau (3', 3") permettant de recevoir et d'envoyer des paquets de données et des paquets d'informations de routage, lesdites premières interfaces de réseau (3', 3") étant connectées à des liaisons de réseau bidirectionnelles (11', 11"),
- une seconde interface de réseau (4a) permettant d'envoyer des paquets de données et des informations de routage, ladite seconde interface de réseau (4a) étant connectée à une liaison de réseau unidirectionnelle (10),
- des moyens d'informations de routage (5) permettant de stocker et de distribuer des informations de routage, et
- une unité de routage (6) permettant de déterminer une interface de réseau sortante (3, 4) pour un paquet de données reçu selon l'adresse de destination du paquet, dans laquelle l'unité de routage (6) détermine l'interface de réseau sortante (3, 4) sur la base des informations de routage stockées,
dans lequel les moyens de filtrage (7a) permettant de filtrer, y compris modifier, supprimer et/ou maintenir tel quel, une partie ou l'ensemble des informations de routage devant être envoyées par l'intermédiaire de la seconde interface de réseau (4a) sont fournis ;
**caractérisé en ce qu'**ils comprennent en outre
un module de commande de filtrage (12) qui détecte le nombre de routeurs transmettant des données par l'intermédiaire de la liaison de réseau unidirectionnelle (10) et qui commande les moyens de filtrage (7a) selon le nombre de routeurs détecté, dans lequel le module de commande de filtrage (12) désactive les moyens de filtrage (7a), si plus d'un routeur transmet des données par l'intermédiaire de la liaison de réseau unidirectionnelle (10) et active les moyens de filtrage (7a), si un seul premier routeur (1) est détecté.

11. Routeur selon la revendication 10, comprenant des moyens de tunnellisation permettant d'établir un liaison de réseau inverse correspondant à la liaison de réseau unidirectionnelle (10) afin d'activer une communication bidirectionnelle à destination des dispositifs de réseau.

12. Routeur selon la revendication 10 ou 11, dans lequel les moyens d'informations de routage (5) comprennent des moyens de stockage (8) pour stocker une table de routage ayant des entrées correspondant aux adresses de destination des paquets, et dans lequel les moyens d'informations de routage (5) comprennent des moyens de génération de paquets d'informations de routage (9) pour générer des paquets d'informations de routage sur la base des entrées de la table de routage.

13. Routeur selon la revendication 12, dans lequel les moyens de filtrage (7a) sont adaptés pour filtrer les informations de routage stockées dans la table de routage, et dans lequel les moyens de génération de paquets d'informations de routage (9) génèrent des paquets d'informations de routage sur la base des informations de routage filtrées.

14. Routeur selon la revendication 12, dans lequel les moyens de filtrage (7a) sont adaptés pour supprimer des paquets d'informations de routage spécifiés générés par les moyens de génération de paquets d'informations de routage (9) et dans lequel le routeur (1) envoie les paquets d'informations de routage filtrés par l'intermédiaire de la seconde interface de réseau (4a) aux dispositifs de réseau.

15. Routeur selon l'une quelconque des revendications 10 à 14, dans lequel la seconde interface de réseau (4a) est conçue pour envoyer des données à la liaison de réseau unidirectionnelle.

16. Routeur selon l'une quelconque des revendications 10 à 15, dans lequel la seconde interface de réseau (4a) est connectée à un émetteur satellite transmettant les données à un satellite (15).

17. Routeur (récepteur) permettant de réduire une charge de trafic de réseau dans un réseau comprenant une liaison unidirectionnelle et permettant d'acheminer des paquets de données dans un réseau de données selon une adresse de destination, comprenant
- une ou plusieurs premières interfaces de réseau (3', 3") permettant de recevoir et d'envoyer des paquets de données et des paquets d'informations de routage, lesdites premières interfaces de réseau (3', 3") étant connectées à des liaisons de réseau bidirectionnelles (11', 11"),
- une seconde interface de réseau (4a) permettant de recevoir des paquets de données et des informations de routage, ladite seconde interface de réseau (4a) étant connectée à une liaison de réseau unidirectionnelle (10),
- des moyens d'informations de routage (5) permettant de stocker et de distribuer des informations de routage, et
- une unité de routage (6) permettant de déterminer une interface de réseau sortante (3, 4) pour un paquet de données reçu selon l'adresse de destination du paquet, dans laquelle l'unité de routage (6) détermine l'interface de réseau sortante (3, 4) sur la base des informations de routage stockées,
dans lequel les moyens de filtrage (7b) permettant de filtrer, y compris modifier, supprimer et/ou maintenir tel quel, une partie ou l'ensemble des informations de routage reçues par la seconde interface de réseau (4a) sont fournis ;
**caractérisé en ce qu'**il comprend en outre
un module de commande de filtrage (12) qui détecte le nombre de routeurs transmettant des données par l'intermédiaire de la liaison de réseau unidirectionnelle (10) et qui commande les moyens de filtrage (7b) selon le nombre de routeurs détecté, dans lequel le module de commande de filtrage (12) désactive les moyens de filtrage (7b), si un seul routeur (1) transmet des données par l'intermédiaire de la liaison de réseau unidirectionnelle (10) et active les moyens de filtrage (7b), si plus d'un routeur est détecté.

18. Routeur selon la revendication 17, comprenant des moyens de tunnellisation permettant d'établir un liaison de réseau inverse correspondant à la liaison de réseau unidirectionnelle (10) afin d'activer une communication bidirectionnelle à destination des dispositifs de réseau.

19. Routeur selon la revendication 17 ou 18, dans lequel
les moyens d'informations de routage (5) comprennent des moyens de stockage (8) pour stocker une table de routage ayant des entrées correspondant aux adresses de destination de paquets,
les moyens de filtrage (7b) sont adaptés pour filtrer des paquets d'informations de routage spécifiés reçus par la seconde interface de réseau (4b) et les moyens d'informations de routage (5) ajoutent des entrées à la table de routage sur la base des paquets d'informations de routage filtrés.

20. Routeur selon l'une quelconque des revendications 17 à 19, dans lequel la seconde interface de réseau (4b) est connectée à un récepteur satellite recevant des données d'un satellite (15).

21. Routeur selon l'une quelconque des revendications 10 à 20, dans lequel les moyens de filtrage (7a, 7b) sont adaptés pour filtrer des informations de routage sur la base d'une adresse de destination spécifiée pour les paquets d'informations de routage, notamment des adresses de multidiffusion IP prédéterminées.

22. Routeur selon l'une quelconque des revendications 10 à 21, dans lequel les informations de routage sont distribuées dans le réseau sur la base de protocoles de routage à diffusion individuelle, notamment le Routing Information Protocol (RIP) et/ou l'Open Shortest Path First (OSPF).

23. Routeur selon l'une quelconque des revendications 10 à 22, dans lequel l'unité de routage (6) détermine une pluralité d'interfaces de réseau (3, 4) pour un paquet de données multidiffusé reçu et réplique le paquet de données afin d'envoyer le paquet de données à plusieurs destinations.

24. Routeur selon l'une quelconque des revendications 10 à 23, dans lequel les moyens d'informations de routage (5) génèrent des informations de routage sur la base des paquets d'informations de routage reçus.

25. Méthode permettant de réduire une charge de trafic de réseau dans un réseau comprenant une liaison unidirectionnelle et permettant de transmettre des informations de routage dans un réseau de données à partir d'un premier routeur (1, 1-1) vers un second routeur (2, 2-1) par l'intermédiaire d'une liaison de réseau unidirectionnelle (10),
dans laquelle le premier routeur (1) est connecté à une liaison de réseau bidirectionnelle (11) et est prévu pour recevoir et envoyer des paquets de données et des informations de routage par l'intermédiaire de la liaison bidirectionnelle (11) et le premier routeur (1) est connecté à la liaison de réseau unidirectionnelle (10) et est prévu pour envoyer des paquets de données et des informations de routage par l'intermédiaire de la liaison de réseau unidirectionnelle (10), et
dans laquelle le second routeur (2) est connecté à une liaison de réseau bidirectionnelle (11) et est prévu pour recevoir et envoyer des paquets de données et des informations de routage par l'intermédiaire de la liaison de réseau bidirectionnelle (11) et le second routeur (2) est connecté à la liaison de réseau unidirectionnelle (10) et est prévu pour recevoir des paquets de données et des informations de routage par l'intermédiaire de la liaison de réseau unidirectionnelle (10),
dans laquelle les informations de routage sont filtrées quand elles sont transmises du premier routeur (1) au second routeur (2) ;
**caractérisée par**
- la détection du nombre de premiers routeurs (1-1, 1-2) envoyant des données par l'intermédiaire de la liaison de réseau unidirectionnelle (10) ; dans laquelle,
- si un seul premier routeur (1-1) envoyant des données par l'intermédiaire de la liaison de réseau unidirectionnelle (10) est détecté, le premier routeur (1-1) filtre, y compris modifie, supprime et/ou maintient tel quel, une partie ou l'ensemble des informations de routage utilisant les moyens de filtrage (7a) envoyant des informations de routage à partir dudit premier routeur détecté (1-1, 1-2) par l'intermédiaire de la liaison de réseau unidirectionnelle (10) au second routeur (2) et recevant les informations de routage par le second routeur (2) ; et
- si plus d'un premier routeur (1-1, 1-2) envoyant des données par l'intermédiaire de la liaison de réseau unidirectionnelle (10) est détecté, le second routeur (2) filtre les informations de routage en utilisant les moyens de filtrage (7b) envoyant les informations de routage à partir des premiers routeurs (1-1, 1-2) par l'intermédiaire de la liaison de réseau unidirectionnelle (10) au second routeur (2) et recevant les informations de routage par le second routeur (2).

26. Méthode selon la revendication 25, comprenant :
- le filtrage des informations de routage dans le premier routeur (1) ;
- l'envoi des informations de routage filtrées par l'intermédiaire de la liaison de réseau unidirectionnelle (10) au second routeur ; et
- la réception des informations de routage filtrées par le second routeur (2) .

27. Méthode selon la revendication 25 ou 26, dans laquelle une pluralité de premiers routeurs (1-1, 1-2) sont fournis et dans laquelle la méthode comprend :
- l'envoi d'informations de routage à partir de l'un des premiers routeurs (1-1, 1-2) par l'intermédiaire de la liaison de réseau unidirectionnelle (10) au second routeur (2) ;
- la réception des informations de routage par le second routeur (2) ; et
- la modification des informations de routage reçues par le second routeur (2).

28. Méthode selon l'une quelconque des revendications 25 à 27, dans laquelle le filtrage des informations de routage est effectué sur la base d'une adresse de destination spécifiée pour les paquets d'informations de routage, notamment des adresses de multidiffusion IP prédéterminées.

29. Méthode selon l'une quelconque des revendications 25 à 28 comprenant :
la génération d'informations de routage à partir des paquets d'informations de routage reçues.

30. Méthode permettant de réduire une charge de trafic de réseau dans un réseau comprenant une liaison unidirectionnelle et permettant de faire fonctionner un routeur dans un réseau de données sur la base des informations de routage stockées, dans lequel le routeur (1) est connecté à au moins une liaison de réseau unidirectionnelle (10) et est prévu pour envoyer des paquets de données et des informations de routage par l'intermédiaire de la liaison de réseau unidirectionnelle (10) aux dispositifs de réseau et le routeur (1) est connecté à une liaison de réseau bidirectionnelle (11) et est prévu pour recevoir et envoyer des paquets de données et des informations de routage par l'intermédiaire de la liaison de réseau bidirectionnelle (11), la méthode comprenant ce qui suit :
- filtrer, y compris modifier, supprimer et/ou maintenir tel quel, une partie ou l'ensemble des informations de routage stockées grâce aux moyens de filtrage (7a) ; et
- envoyer les informations de routage filtrées par l'intermédiaire de la liaison de réseau unidirectionnelle (10) à un ou plusieurs des dispositifs de réseau ;
**caractérisée par**
- la détection du nombre de routeurs (1) transmettant des données par l'intermédiaire de la liaison de réseau unidirectionnelle (10) ;
- la désactivation du filtrage des informations de routage par les moyens de filtrage (7a), si plus d'un routeur (1) transmet des données par l'intermédiaire de la liaison de réseau unidirectionnelle (10) ; et
- l'activation du filtrage par les moyens de filtrage (7a), si un seul routeur (1) est détecté.

31. Méthode selon la revendication 30, dans laquelle les paquets d'informations de routage sont générés à partir des informations de routage filtrées et sont envoyés par l'intermédiaire de la liaison de réseau unidirectionnelle (10).

32. Méthode selon la revendication 30, comprenant :
- la génération de paquets d'informations de routage sur la base des informations de routage stockées ;
- le filtrage des paquets d'informations de routage générés ; et
- l'envoi des paquets d'informations de routage filtrés par l'intermédiaire de la liaison de réseau unidirectionnelle.

33. Méthode selon l'une quelconque des revendications 30 à 32, comprenant :
- l'établissement d'une liaison de réseau inverse à destination d'un dispositif de réseau au moyen d'une interface de réseau bidirectionnelle (3) afin d'activer une communication bidirectionnelle à destination du dispositif de réseau ; et
- la réception de paquets envoyés par le dispositif de réseau par l'intermédiaire de la liaison de réseau inverse.

34. Méthode permettant de réduire une charge de trafic de réseau dans un réseau comprenant une liaison unidirectionnelle et permettant de faire fonctionner un routeur dans un réseau de données sur la base des informations de routage stockées, dans lequel le routeur (2) est connecté à au moins une liaison de réseau unidirectionnelle (10) et est prévu pour recevoir des paquets de données et des informations de routage par l'intermédiaire de la liaison de réseau unidirectionnelle (10) en provenance des dispositifs de réseau et le routeur (2) est connecté à une liaison de réseau bidirectionnelle (11) et est prévu pour recevoir et envoyer des paquets de données et des informations de routage par l'intermédiaire de la liaison de réseau bidirectionnelle (11), la méthode comprenant ce qui suit :
- filtrer, y compris modifier, supprimer et/ou maintenir tel quel, une partie ou l'ensemble des informations de routage reçues par l'intermédiaire de la liaison de réseau unidirectionnelle (10) en provenance des dispositifs de réseau grâce aux moyens de filtrage (7b) ; et
- mettre à jour les informations de routage stockées sur la base des informations de routage filtrées ;
**caractérisée par**
- la détection du nombre de routeurs (1) transmettant les données par l'intermédiaire de la liaison de réseau unidirectionnelle (10) ;
- la désactivation du filtrage des informations de routage, si un seul routeur (1) transmet les données par l'intermédiaire de la liaison de réseau unidirectionnelle (10) ; et
- l'activation du filtrage par les moyens de filtrage (7b), si plus d'un routeur est détecté.

35. Méthode selon la revendication 34, comprenant :
- l'établissement d'une liaison de réseau inverse à destination d'un dispositif de réseau au moyen d'une interface de réseau bidirectionnelle (3) afin d'activer une communication bidirectionnelle à destination du dispositif de réseau ; et
- l'envoi de paquets dans la direction inverse de la liaison de réseau unidirectionnelle (10) par l'intermédiaire de la liaison de réseau inverse à destination du dispositif de réseau.

36. Méthode selon l'une quelconque des revendications 30 à 35, dans laquelle la modification des informations de routage est effectuée sur la base d'une adresse de destination spécifiée pour les paquets d'informations de routage, notamment des adresses de multidiffusion IP prédéterminées.
